(19) Europäisches Patentamt
European Patent Office
Office européen des brevets

(11) EP 1 292 630 B1

(12) EUROPÄISCHE PATENTSCHRIFT

(45) Veröffentlichungstag und Bekanntmachung des Hinweises auf die Patenterteilung:
**07.04.2004 Patentblatt 2004/15**

(21) Anmeldenummer: **01955289.2**

(22) Anmeldetag: **25.05.2001**

(51) Int Cl.$^7$: **C08G 64/30**

(86) Internationale Anmeldenummer:
**PCT/EP2001/005966**

(87) Internationale Veröffentlichungsnummer:
**WO 2001/094444 (13.12.2001 Gazette 2001/50)**

(54) **VERFAHREN ZUR HERSTELLUNG VON ALIPHATISCHEN OLIGOCARBONATDIOLEN**
METHOD FOR PRODUCING ALIPHATIC OLIGOCARBONATE DIOLS
PROCEDE DE PRODUCTION DE DIOLS D'OLIGOCARBONATE ALIPHATIQUES

(84) Benannte Vertragsstaaten:
**AT BE CH CY DE DK ES FI FR GB GR IE IT LI LU MC NL PT SE TR**

(30) Priorität: **06.06.2000 DE 10027907**

(43) Veröffentlichungstag der Anmeldung:
**19.03.2003 Patentblatt 2003/12**

(73) Patentinhaber: **Bayer MaterialScience AG**
**51368 Leverkusen (DE)**

(72) Erfinder:
- **SCHLEMENAT, Andreas**
**47800 Krefeld (DE)**
- **TILLACK, Jörg**
**51427 Bergisch Gladbach (DE)**
- **LAUE, Jörg**
**41541 Dormagen (DE)**
- **WITOSSEK, Herbert**
**04157 Leipzig (DE)**

(56) Entgegenhaltungen:
**EP-A- 1 018 504**
**DE-A- 19 829 593**
**US-A- 5 171 830**

- **DATABASE WPI Section Ch, Week 199102 Derwent Publications Ltd., London, GB; Class A23, AN 1991-011572 XP002182922 & JP 02 284918 A (MITSUI PETROCHEM IND CO LTD), 22. November 1990 (1990-11-22)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein neues Verfahren zur Herstellung von aliphatischen Oligocarbonatdiolen aus aliphatischen Diolen durch eine mehrstufige Umesterung mit Dimethylcarbonat (DMC) unter nahezu vollständiger Ausnutzung des eingesetzten Carbonates. Durch das erfindungsgemäße Verfahren ist eine besonders ergiebige Produktion von aliphatischen Oligocarbonatdiolen ausgehend von leicht zugänglichem DMC möglich.

Aliphatische Oligocarbonatdiole sind als wichtige Zwischenprodukte, beispielsweise zur Herstellung von Kunststoffen, Lacken und Klebstoffen, z. B. durch Umsetzung mit Isocyanaten, Epoxiden, (cyclischen) Estern, Säuren oder Säureanhydriden seit langem bekannt. Sie können prinzipiell aus aliphatischen Diolen durch Umsetzung mit Phosgen (z.B. DE-A 1 595 446), bis-Chlorkohlensäureestern (z.B. DE-A 857 948), Diarylcarbonaten (z.B. DE-A 1 915 908), cyclischen Carbonaten (z.B. DE-A 2 523 352: Ethylencarbonat) oder Dialkylcarbonaten (z.B. DE-A 2 555 805) hergestellt werden.

Von den Carbonatquellen besitzt das zu den Diarylcarbonaten gehörende Diphenylcarbonat (DPC) eine besondere Bedeutung, da aus DPC aliphatische Oligocarbonatdiole von besonders hoher Qualität erzeugt werden können (z. B. US-A 3 544 524, EP-A 292 772). DPC reagiert im Gegensatz z.B. zu aliphatischen Carbonatquellen quantitativ mit aliphatischen OH-Funktionen, so dass nach dem Entfernen des entstandenen Phenols alle endständigen OH-Gruppen des Oligocarbonatdiols für die Umsetzung mit z.B. Isocyanat-Gruppen zur Verfügung stehen. Ferner werden nur sehr geringe Konzentrationen an löslichem Katalysator benötigt, so dass dieser im Produkt verbleiben kann.

Die auf DPC basierenden Verfahren haben allerdings folgende Nachteile:

Vom DPC verbleiben nur ca. 13 % im Produkt, der Rest wird als Phenol abdestilliert. Von den Dialkylcarbonaten verbleibt - abhängig von dem jeweiligen Alkylrest - ein wesentlich höherer Anteil im späteren Produkt. Vom Dimethylcarbonat (DMC) verbleiben z.B. ca. 31 % im späteren Produkt, da das abdestillierte Methanol ein deutlich geringeres Molekulargewicht als das Phenol aufweist.

Dadurch, dass man das hochsiedende Phenol (Normalsiedepunkt: 182°C) aus der Reaktionsmischung abtrennen muss, kann man nur Diole mit einem Siedepunkt deutlich oberhalb von 182°C in der Reaktion einsetzen, um das unbeabsichtigte Abdestillieren des Diols zu vermeiden.

Dialkylcarbonate, insbesondere Dimethylcarbonat (DMC) als Ausgangskomponenten zeichnen sich sind aufgrund der einfacheren Herstellbarkeit durch eine bessere Verfügbarkeit aus. Zum Beispiel kann DMC durch Direktsynthese aus MeOH und CO gewonnen werden (z.B. EP-A 0 534 454, DE-A 19 510 909).

Zahlreiche Anmeldungen (z. B: US-A 2 210 817, US-A 2 787 632, EP-A 364 052 sowie JP 02 28 49 18 A und EP-A 1 018 504) befassen sich mit der Umsetzung von Dialkylcarbonaten mit aliphatischen Diolen:

Stand der Technik ist es, aliphatische Diole zusammen mit einem Katalysator und dem Dialkylcarbonat (z.B. Dimethylcarbonat, Diethylcarbonat, Diallylcarbonat, Dibutylcarbonat) vorzulegen und den entstehenden Alkohol (Ethanol, Butanol, Allylalkohol) aus dem Reaktionsgefäß über eine Kolonne abzudestillieren. In der Kolonne wird das höhersiedende, mitverdampfte Dialkylcarbonat von dem leichter siedenden Alkohol getrennt und wieder in die Reaktionsmischung zurückgeführt.

Im Gegensatz zu DPC reagieren Dialkylcarbonate nicht quantitativ mit aliphatischen OH-Funktionen, da es sich bei der Umesterung zweier aliphatischer Alkohole um eine Gleichgewichtsreaktion handelt. So liegt nach dem Entfernen des entstandenen Alkohols ein Teil der gewünschten endständigen OH-Gruppen nicht als OH-Gruppen, sondern als Alkoxycarbonyl-Endgruppen vor (Gruppe -OC(O)-OR2 in Formel I, wobei R2 für einen Alkylrest und R1 für ein Alkylenradikal steht).

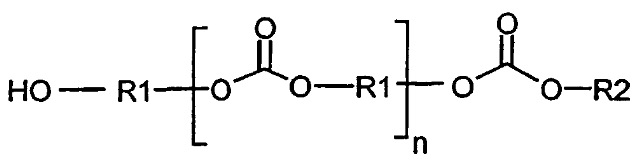

(I)

Diese Alkoxycarbonyl-Endgruppen sind für die weitere Umsetzung mit z.B. Isocyanaten, Epoxiden, (cyclischen) Estern, Säuren oder Säureanhydriden nicht geeignet. Daher wird abschließend die Umsetzung durch Anlegen von Vakuum zwecks Entkappung und Entfernung des entstehenden Alkohols vervollständigt. Die Ansätze werden zu diesem Zweck üblicherweise im Vakuum beheizt und gerührt, wobei allerdings noch nicht die Qualität von Oligocarbonatdiolen erreicht werden kann, wie sie durch Umsetzung mit DPC erhalten wird.

In der EP-A 0 364 052 wird z. B. ein Verfahren beschrieben, bei dem bei 200°C und einem Vakuum von ca. 50 Torr (ca. 66 mbar) ein Nutzungsgrad der endständigen OH-Gruppen von nur ca. 97 % erreicht wird. Auch unter deutlich drastischeren Bedingungen können die Nutzungsgrade der endständigen OH-Gruppen nur unwesentlich gesteigert werden. Bei 1 Torr (ca. 1,3 mbar) werden nur Nutzungsgrade von ca. 98 % erreicht (EP-A 0 798 328).

Die Verwendung von Dimethylcarbonat (DMC) zur Herstellung von aliphatischen Oligocarbonatdiolen ist trotz seiner guten Zugänglichkeit erst seit kurzem bekannt (z.B. US-A 5 171 830, EP-A 798 327, EP-A 798 328, DE-A 198 29 593).

Bei der Verwendung von DMC zur Herstellung von Oligocarbonatdiolen entstehen niedrigsiedende azeotrope DMC-Methanol-Gemische, die je nach Druck ca. 20 bis 30 Gewichtsprozent DMC enthalten (ca. 30 Gewichtsprozent bei Normaldruck). Zur Trennung dieser azeotropen Gemische in Methanol und DMC ist ein größerer Aufwand erforderlich (z.B. Membran-Trennung). Das azeotrop abdestillierte DMC ist daher für die Reaktion verloren und steht für eine vollständige Umsetzung nicht mehr zur Verfügung. Deshalb muss es durch zusätzliches, frisches DMC ersetzt werden.

In EP-A 0 358 555 und US-A 4 463 141 wird z. B. schlicht empfohlen, die azeotrop abdestillierte Menge DMC beim Einwiegen zusätzlich zu berücksichtigen.

In EP-A 0 798 328 wird die entsprechende Diol-Komponente mit DMC unter Destillation des Azeotrops umgesetzt. Die anschließende Entkappung geschieht durch Vakuumdestillation, wobei unter sehr drastischen Vakuumbedingungen (1 Torr, ca. 1,3 mbar) Nutzungsgrade der endständigen OH-Gruppen von ca. 98 % erreicht werden (EP-A 0 798 328: Tabelle 1). Auf den Verbleib des Azeotrops und den Verlust des DMCs wird nicht eingegangen.

In EP-A 798 327 wird entsprechend ein zweistufiges Verfahren beschrieben, in dem ein Diol zuerst mit einem DMC-Überschuss unter Destillation des Azeotrops zu einem Oligocarbonat umgesetzt wird, dessen endständige OH-Gruppen komplett als Methoxycarbonyl-Endgruppen unzugänglich sind. Nach Entfernen des Katalysators und Destillation des überschüssigen DMCs im Vakuum (65 Torr, 86 mbar) wird in einem zweiten Schritt durch Zugabe weiterer Mengen des Diols und eines Lösungsmittels (z.B. Toluol) als Schlepper für entstehendes Methanol das Oligocarbonatdiol erhalten. Reste des Lösungsmittels müssen dann im Vakuum (50 Torr, 67 mbar) abdestilliert werden. Der Nutzungsgrad der endständigen OH-Gruppen beträgt nach diesem Verfahren nur ca. 97 %. Nachteilig an diesem Verfahren ist die aufwendige Durchführung durch Einsatz eines Lösungsmittels und durch das mehrmalige Destillieren, der niedrige Nutzungsgrad der endständigen OH-Gruppen sowie der sehr hohe DMC-Verbrauch.

In DE-A 198 29 593 wird ein Diol mit DMC umgesetzt unter Abdestillation des entstehenden Methanols. Auf die gesamte Azeotrop-Problematik wird hier - abgesehen von einer einzigen Erwähnung des Wortes "Azeotrop" in der Tabelle "Ablaufschema des erfindungsgemäßen Verfahrens" - nicht eingegangen. In Anspruch 1c wird beschrieben, dass das molare Verhältnis von Methanol zu DMC im Destillat zwischen 0,5 : 1 und 99 : 1 liegt. Der DMC-Gehalt des abdestillierten Methanols liegt demnach zwischen 85 und 2,8 Gewichtsprozent. Wie die detaillierte Analyse zeigt (siehe unten), wird in der DE-A 198 29 593 in der Tat ebenfalls DMC im Überschuss eingesetzt und azeotrop abdestilliert. Dabei gehen ca. 27,8 % des eingesetzten DMCs verloren.

Wie das Vergleichsbeispiel 1 zeigt (siehe unten), können DMC-Gehalte im Destillat von weniger als 20 % nur bei hohen Katalysator-Konzentrationen (ca. 0,15 % $Ti(OiPr)_4$, entspricht ca. 250 ppm Ti) und sehr langen Reaktionsdauern erreicht werden. Bei diesen hohen Katalysator-Konzentrationen kann der Katalysator nach Abschluss der Reaktion nicht im Produkt belassen werden, sondern muss neutralisiert werden. In der DE-A 198 29 593 wird daher der Kontakt (Beispiel 1: 0,15 % $Ti(O\text{-}nBu)_4$ bzw. Beispiel 2: 0,12 % $Ti(O\text{-}nBu)_4$) durch Zugabe von Phosphorsäure neutralisiert bzw. maskiert.

Mit sinkender Katalysator-Konzentration nimmt der DMC-Gehalt im Destillat zu (Vergleichsbeispiel 1). Gleichbleibend niedrige DMC-Gehalte im Destillat können nur durch drastische Erhöhung der Reaktionsdauer erreicht werden. Bei einer abgesenkten Katalysator-Konzentration von ca. 0,01 % $Ti(O\text{-}iPr)_4$ (ca. 16 ppm Ti) kann der Katalysator nach Abschluss der Reaktion im Produkt verbleiben. Wie das Vergleichsbeispiel 1 zeigt führt dies jedoch zu technisch nicht mehr praktikablen Reaktionszeiten bzw. DMC-Gehalten von 22 bis 30 % im Destillat.

Auf den Nutzungsgrad der endständigen OH-Gruppen wird in der DE-A 198 29 593 nicht eingegangen.

In US-A 5 171 830 wird Butandiol-1,4 mit DMC zunächst am Rückfluss erhitzt und dann flüchtige Bestandteile (azeotrop) abdestilliert. Nach Vakuumdestillation unter drastischen Bedingungen (1 Torr, 1,3 mbar), Aufnahme des Produktes in Chloroform, Fällen des Produktes mit Methanol und Trocknen des Produktes wird ein Oligocarbonatdiol in 55 % der theoretischen Ausbeute erhalten (Beispiel 6). Auf den Nutzungsgrad der endständigen OH-Gruppen und die Azeotrop-Problematik wird nicht näher eingegangen.

In der Deutschen Patentanmeldung 1999 00 554.0 wird ein Verfahren beschrieben, in dem die Umesterung des Diols mit DMC durch Reaktiv-Rektifikation in einer Gas-Flüssigkeits-Gegenstrom-Apparatur durchgeführt wird. Durch die Gegenstromfahrweise kann das Methanol-DMC-Azeotrop gebrochen und ein Umsatz an DMC von ca. 95 % erreicht werden. Zur Entkappung der OH-Endgruppen wird im leichten Vakuum (ca. 150 mbar) Stickstoff als Stripp-Gas durch das Produkt geleitet (2 bis 200 Nl/h (Nl = Normliter)). Durch das Strippen kann das Methanol weitgehend ausgetragen, die Umesterung vervollständigt und Nutzungsgrade der endständigen OH-Gruppen von ca. 99,8 % erreicht werden.

In den bisher bekannten Veröffentlichungen wird kein technisch einfach zu realisierendes Verfahren zur Umsetzung von DMC mit aliphatischen Diolen zu Oligocarbonatdiolen mit hohen Raumzeitausbeuten, nahezu vollständigem Umsatz und mit hohen Nutzungsgraden der endständigen OH-Gruppen beschrieben. Der Zwangsanfall von DMC-Methanol-Gemischen unterschiedlicher Zusammensetzung und der damit verbundene Verlust an DMC schmälert die Attraktivität der beschriebenen Verfahren beträchtlich.

Aufgabe der Erfindung ist daher, ein einfaches, ergiebiges, auch großtechnisch durchführbares Verfahren bereitzustellen, das es erlaubt, Oligocarbonatdiole durch Umesterung von aliphatischen Diolen mit Dimethylcarbonat, gegebenenfalls unter Einsatz einer nur so geringen Katalysatormenge, dass dieser nach Abschluss der Reaktion im Produkt verbleiben kann, mit guten Raumzeitausbeuten, in einfachen Apparaturen, unter weitgehend vollständiger Ausnutzung des eingesetzten Carbonates herzustellen.

Es wurde nun überraschend gefunden, dass die Herstellung von aliphatischen Oligocarbonatdiolen durch Umsetzung von aliphatischen Diolen mit Dimethylcarbonat, gegebenenfalls beschleunigt durch Katalysatoren, mit einem Umsatzgrad des eingesetzten DMCs von mehr als 80 % gelingt, indem in einem mehrstufigen Verfahren abdestillierte DMC-Methanol-Gemische unter weiterem Umsatz und Abreicherung des enthaltenen DMCs wieder in die Reaktionslösung zugefahren werden.

Gegenstand der Erfindung ist daher ein Verfahren zur Herstellung von aliphatischen Oligocarbonatdiolen durch Umsetzung von aliphatischen Diolen mit Dimethylcarbonat, gegebenenfalls beschleunigt durch Katalysatoren, mit einem Umsatzgrad des eingesetzten DMCs von mehr als 80 %, dadurch gekennzeichnet, dass in einem mehrstufigen Verfahren abdestillierte DMC-Methanol-Gemische unter weiterem Umsatz und Abreicherung des enthaltenen DMCs im selben oder in einem folgenden Reaktionsansatz in die Reaktionslösung zugefahren werden.

Bei der Durchführung des erfindungsgemäßen Verfahrens zur Herstellung aliphatischer Oligocarbonatdiole durch Umsetzung von aliphatischen Diolen mit Dimethylcarbonat wird in einem Ansatz abdestilliertes Gemisch aus DMC und MeOH in einem folgenden Reaktionsansatz zu Beginn erneut eingesetzt. Dieses abdestillierte DMC-Methanol-Gemisch wird also unter weiterer Umsetzung des enthaltenen DMCs wiederverwandt Dabei wird das DMC des zuvor aufgefangenen und wieder eingesetzten Gemisches abgereichert, und es fallen Destillate mit verringerten DMC-Gehalten an.

Das erfindungsgemäße Verfahren kann zwei- oder mehrstufig durchgeführt werden.

Zur nahezu vollständigen Umsetzung des eingesetzten DMCs in einer mehrstufigen Fahrweise wird in dem erfindungsgemäßen Verfahren folgendermaßen vorgegangen:

Bei einer z.B. zweistufigen Batch-Fahrweise wird in der ersten Stufe die jeweilige Diol-Komponente im Kessel zusammen mit einem Katalysator vorgelegt und das (z.B. azeotrope) DMC-Methanol-Gemisch, das während eines vorhergehenden Batch-Ansatzes angefallen ist und aufgefangen wurde, langsam, vorzugsweise Unterspiegel z.B. über ein Tauchrohr zugefahren. Je nach Zulaufgeschwindigkeit erhält man am Kopf einer nur kurzen Kolonne ein Destillat mit einem Anteil an DMC zwischen 0,5 und 20 %, bevorzugt zwischen 1,5 und 10 %, besonders bevorzugt zwischen 3 und 7 %.

In der zweiten Stufe wird die restliche DMC-Menge, die sich aus der durch die Stöchiometrie des gewünschten Endproduktes vorgegebenen Menge und der bereits in der ersten Stufe der Reaktion zugefahrenen Menge an DMC ergibt, schnell in den Kessel gefahren und das so über eine große Kolonne abdestillierte (z.B. azeotrope) DMC-Methanol-Gemisch aufgefangen.

Die Zusammensetzung aller Destillate wird bestimmt, und der Verlust an DMC, der durch Abdestillieren der DMC-Methanol-Gemische in der ersten und zweiten Stufe aufgetreten ist, wird in einem Nachfahrschritt durch Zugabe von reinem DMC ausgeglichen. Das abdestillierte Azeotrop aus DMC und MeOH wird ebenfalls aufgefangen und zusammen mit dem Destillat aus der zweiten Stufe in einem folgenden Reaktionsansatz in der ersten Stufe wieder eingesetzt.

Zur Erreichung eines Nutzungsgrades der OH-Endgruppen von >99 % ist eine Entkappung der Endgruppen erforderlich.

Zur Entkappung der Endgruppen (Nutzbarmachung der endständigen OH-Gruppen) können die letzten Reste von Methanol und Spuren von Dimethylcarbonat aus dem Produkt entfernt werden. Zum Beispiel durch Einleiten eines inerten Gases (z.B. $N_2$) in das Oligocarbonatdiol werden im Produkt, gegebenenfalls bei einem nur leichten Vakuum von z.B. ca. 150 mbar Gasblasen erzeugt, die im Produkt mit Methanol bzw. DMC gesättigt werden. So wird das Methanol nahezu vollständig aus dem Reaktionsansatz ausgetrieben. Durch das Strippen mit einem Inertgas kann durch die Entfernung des Methanols das Gleichgewicht weiter zu Gunsten des Produktes verschoben, die Umesterung vervollständigt und damit die Endgruppen nutzbar gemacht werden. Die Qualität des entstandenen Oligocarbonatdiols kann so auf das Niveau von DPC-basierenden Oligocarbonatdiolen angehoben werden, der Nutzungsgrad der endständigen OH-Gruppen steigt auf mehr als 98 %, bevorzugt auf 99,0 bis 99,95 %, besonders bevorzugt auf 99,5 bis 99,9 % an.

Die Destillate mit den geringen DMC-Gehalten können verworfen, als Lösungsmittel oder Waschflüssigkeiten in anderen Verfahren genutzt, durch wässrige Hydrolyse zu Methanol umgesetzt und als Methanol weiter verwandt oder thermisch verwertet werden oder auch im erfindungsgemäßen Verfahren in einer mehrstufigen Fahrweise unter weiterer Abreicherung des DMC-Gehaltes eingesetzt werden.

In einer dreistufigen Variante des erfindungsgemäßen Verfahrens zum Beispiel können diese Gemische folgendermaßen eingesetzt werden: In einer ersten Stufe wird z.B. ein ca. 5-prozentiges DMC-Methanol-Gemisch, das in der zweiten Stufe des vorherigen Reaktionsansatz aufgefangen wurde, eingesetzt. Dadurch erhält man eine weitere Abreicherung des DMCs im Destillat auf 0,3 % bis 5 %, bevorzugt auf 0,8 % bis 4 %, besonders bevorzugt auf 1,5 % bis 3 %. Diese Destillate werden verworfen oder - wie zuvor beschrieben - weiter genutzt. In der zweiten Stufe wird das DMC-Methanol-Gemisch mit z.B. ca. 30 % DMC eingesetzt, das im vorherigen Ansatz in der dritten Stufe angefallen ist. Dabei fällt dann ein Destillat mit z. B. ca. 5 % DMC an. Dieses Destillat wird im nächsten Ansatz in der ersten Stufe verwandt. In der dritten Stufe wird reines DMC in den Reaktor gefahren, dabei fällt wiederum ein DMC-Methanol-Gemisch mit z.B. 30 % DMC an, das in der zweiten Stufe des folgenden Ansatzes eingesetzt wird. Die DMC-Menge der dritten Stufe wird dabei so gewählt, dass die Summe der DMC-Mengen aller drei Stufen nach Abdestillation der DMC-Methanol-Gemische dabei der durch die gewünschte Stöchiometrie vorgegebenen Menge entspricht. In der dreistufigen Fahrweise ist demnach eine fast quantitative Ausnutzung des eingesetzten DMCs durch zweimaliges Recycling des Destillates möglich.

Durch entsprechende Wiederholung kann das Verfahren auch mehr als dreistufig bis zu n-stufig (n: ganze Zahl größer oder gleich 2) durchgeführt werden.

Prinzipiell ist nach dem erfindungsgemäßen Verfahren eine diskontinuierliche Batchfahrweise oder eine kontinuierliche Fahrweise möglich. Die oben beschriebene Batch-Fahrweise ist nur ein Beispiel und nicht einschränkend zu verstehen. Dem Durchschnittsfachmann ist prinzipiell bekannt wie solche Prozesse vollkontinuierlich durchzuführen sind.

Das Zufahren des DMC-Methanol-Gemisches bzw. des reinen DMCs kann bei dem erfindungsgemäßen Verfahren auch durch mehrmaliges Umpumpen des Destillats geschehen: Während des Zudosierens anfallende Destillate werden wieder in die Pumpenvorlage geleitet, dort aufgefangen und erneut in den Reaktor eingeleitet. Es wird also aus einer Pumpenvorlage kontinuierlich DMC-Methanol-Gemisch bzw. reines DMC in den Reaktor dosiert, wobei ein DMC-ärmeres Gemisch abdestilliert und in der gleichen Vorlage aufgefangen wird. Die DMC-Konzentration des Gemisches in der Vorlage nimmt also stetig ab. Die Geschwindigkeit des Zudosierens wird dabei um ein Vielfaches (z. B. ca. 4 bis 10-fach) höher gewählt als bei einer einfachen Zudosierung. Ist der DMC-Gehalt des Destillates auf den gewünschten Wert gefallen, wird die weitere Zufuhr des DMC-Methanol-Gemisches bzw. des DMCs in den Reaktor gestoppt und noch solange weiter destilliert, bis die gesamte DMC bzw. Methanol-Menge abdestilliert und in der Pumpenvorlage aufgefangen wurde.

Beim Umpumpen der DMC-Methanol-Gemische bzw. des DMCs kann auch mit zwei Vorlagen gearbeitet werden: Aus Vorlage 1 wird ein DMC-Methanol-Gemisch bzw. reines DMC mit einer vielfachen Geschwindigkeit (z.B. ca. 4 bis 10-fach) in den Reaktor geleitet und das anfallende Destillat in Vorlage 2 aufgefangen. Dieses Gemisch erreicht aufgrund der höheren Pumpgeschwindigkeit nicht die geringen DMC-Gehalte wie zuvor, sondern ist nur etwas DMC-ärmer. (z.B. ca. 10 % bis 28 %, je nach Katalysator-Konzentration bei Einsatz eines ca. 32 % DMC-Methanol-Gemisches, Beispiel 8). Nachdem das gesamte DMC-Methanol-Gemisch bzw. das DMC aus Vorlage 1 in den Reaktor gefahren wurde, wird das in Vorlage 2 aufgefangene DMC-Methanol-Gemisch unterspiegel in den Reaktor gefahren. Das jetzt anfallende Destillat wird in Vorlage 1 aufgefangen. Der Wechsel der Vorlagen wird sooft wiederholt, bis der DMC-Gehalt des Destillates unter einen gewünschten Wert (z.B. ca. 3-5 %) gefallen ist. Die Destillate werden also unter jeweils geringerer Abreicherung des DMCs, dafür umso häufiger in den Reaktor geleitet.

In einer weiteren Variante des erfindungsgemäßen Verfahrens wird die letzte Stufe (z.B. die zweite Stufe beim zweistufigen Verfahren), in der reines DMC unter Abdestillation des Azeotrops schnell zudosiert wird, in zwei Teilschritten durchgeführt: Im ersten Teilschritt wird dabei das reine DMC so langsam zudosiert, dass nicht das Azeotrop abdestilliert wird, sondern ein DMC-Methanol-Gemisch mit z.B. ca. 5 bis 8 % DMC. Dieses Destillat wird - wie das Destillat der ersten Stufe - verworfen oder, wie zuvor beschrieben, weiter verwendet. Wie Vergleichsbeispiel 1 zeigt, nimmt der DMC-Gehalt des Destillates beim Zudosieren von DMC mit zunehmender Reaktionsdauer zu. Ist ein bestimmter Schwellenwert überschritten, wird im zweiten Teilschritt im folgenden das restliche DMC wieder so schnell zugefahren, dass azeotrope DMC-Methanol-Gemische abdestilliert werden. Diese Gemische werden dann aufgefangen und in einem folgenden Reaktionsansatz wieder eingesetzt. Ebenso können die anderen Stufen, in denen DMC-Methanol-Gemische eingeleitet werden, in mehreren Teilschritten mit verschiedenen Zufahrgeschwindigkeiten durchgeführt werden.

Das erfindungsgemäße Verfahren (Reaktion bzw. Destillation bei Zufuhr von DMC-Methanol-Gemischen bzw. DMC) wird grundsätzlich im leichten Vakuum, bei Normaldruck oder bei erhöhtem Druck durchgeführt. Vorzugsweise wird die Reaktion bei einem Druck von 0,4 bis 100 bar, bevorzugt von 0,7 bis 15 bar, besonders bevorzugt bei einem Druck von 1 bis 6 bar und - in Abhängigkeit vom jeweiligen Druck - bei Temperaturen von 100 bis 300°, bevorzugt bei Temperaturen von 160 bis 240°C durchgeführt. Ein erhöhter Druck führt dabei aufgrund der besseren Azeotrop-Lage (z.B. ca. 20 % DMC / 80 % MeOH bei 4 bar) zu einem besseren Umsatz von DMC und damit kürzeren Reaktionszeiten bzw. zu geringeren DMC-Gehalten im Destillat.

Der DMC-Gehalt des Destillates bei Einsatz eines DMC-Methanol-Gemisches oder von reinem DMC ist jeweils von der Zufahrgeschwindigkeit bzw. Reaktionsdauer und von der Katalysatormenge abhängig: Eine Erhöhung der Katalysator-Konzentration und/oder eine Absenkung der Zufahrgeschwindigkeit des DMC-Methanol-Gemisches bzw. des DMCs (Erhöhung der Reaktionsdauer) führt dabei zu einer Absenkung des DMC-Gehaltes des Destillates. Eine Senkung der Katalysator-Konzentration bzw. eine Verkürzung der Reaktionsdauer bewirkt einen höheren DMC-Gehalt im Destillat

Durch Bestimmung der DMC-Gehalte der einzelnen Destillate wird die Menge an DMC bestimmt, die durch Destillation aus dem Reaktionsansatz entfernt wurde. Diese fehlende Menge muss vor dem Strippen des Methanols mit inerten Gasen im Vakuum zur Nutzbarmachung der Endgruppen in Form von reinem DMC in den Ansatz nachgefahren werden. Dabei fällt wiederum ein Gemisch aus DMC und Methanol an. Dieses verlorene DMC wird erneut nachgefahren, ein Teil wiederum abdestilliert. Mit jedem Nachfahren wird die Menge an abdestilliertem DMC weniger, man nähert sich demnach der gewünschten Stöchiometrie an (Beispiel 2). Dieses aufwendige Vorgehen kann durch Zusammenfassen der einzelnen Nachfahrschritte deutlich vereinfacht werden: Aus vorherigen Ansätzen sind die Mengen an DMC, die in den einzelnen Nachfahrschritten abdestilliert werden, bekannt oder können - z.B. im ersten Ansatz - zuvor berechnet werden, so dass die komplette Menge an DMC zusammen in einem einzigen Schritt zugefahren werden kann (Beispiel 3, Zusammenfassung der zweiten Stufe und der Nachfahrschritte).

Beim Destillieren des Methanols und dem Entkappen der OH-Endgruppen zum Schluss der Reaktion beim Einleiten von inerten Gasblasen geht eine geringe Menge DMC verloren. Diese Menge muss vorher bei der Zugabe von DMC berücksichtigt werden. Diese Menge kann aus den Erfahrungswerten der vorherigen Ansätze ermittelt werden.

Alternativ kann zuvor ein geringer Überschuss an DMC zugegeben werden, so dass nach dem Abdestillieren des Azeotrops und nach der Entkappung durch Strippen der letzten Reste von Methanol bzw. DMC durch Einleiten eines Inertgases (z.B. $N_2$) im leichten Vakuum (ca. 150 mbar) ein leichter Überschuss an DMC im Produkt verbleibt bzw. als Ester gebunden wurde. Nach dem Strippen wird so ein Produkt erhalten, das eine vollständige Funktionalität der endständigen OH-Gruppen aufweist, jedoch im Polymerisationsgrad zu hoch ist. Die Korrektur erfolgt dann durch Zugabe einer weiteren Menge der Diol-Komponente und einem erneuten, kurzen Umesterungsschritt (Beispiel 4). Die Korrekturmenge kann zum einen über die Massenbilanz - Bestimmung der DMC-Mengen in allen Destillaten und Vergleich mit der insgesamt zugefahrenen Menge - bestimmt werden oder aus einer messbaren Eigenschaft (z.B. OH-Zahl, Viskosität, durchschnittliches Molekulargewicht, etc.) des Produktes, das im Polymerisationsgrad zu hoch liegt, ermittelt werden. Eine erneute Entkappung ist nach der Korrektur nicht notwendig, da bereits vor der Korrektur alle endständigen OH-Gruppen frei vorlagen und durch Zugabe der Diol-Komponenten keine erneute Verkappung aufgebaut wird.

Eine Korrektur durch Zugabe von DMC nach dem Entkappen durch Begasen mit einem inerten Gas bei einem Produkt, das zu wenig DMC enthält, führt zu einem erneuten Aufbau der Verkappung.

Das erfindungsgemäße Verfahren umfasst also in der zweistufigen Variante folgende Verfahrensschritte:

- Vorlegen der Diol-Komponenten und gegebenenfalls des Katalysators im Reaktor,
- 1. Stufe: Einleiten des DMC-Methanol-Gemisches (z.B. des Azeotrops) aus dem vorherigen Ansatz und Reaktion des enthaltenen DMCs, Abdestillieren eines DMC-Methanol-Gemisches mit - je nach Reaktionsbedingungen - z. B. 3 bis 7 % DMC oder wahlweise mehrfaches Umpumpen des Destillates, bis der DMC-Gehalt auf den gewünschten Wert abgesunken ist,
- 2. Stufe: Einleiten und Reaktion von reinem DMC. Die DMC-Menge ist so bemessen, dass nach Abdestillation in allen Schritten (Zufahren des DMC-Methanol-Gemisches (z.B. des Azeotrops), Zufahren von DMC und Entkappung) genau die benötigte Menge DMC oder alternativ ein geringer Überschuss in der Reaktionslösung verbleibt. Wahlweise wird die komplette Menge an DMC in einem Schritt schnell zudosiert oder in zwei Teilschritten: Im ersten Fall wird ein DMC-Methanol-Gemisch (z.B. das Azeotrop) abdestilliert, aufgefangen und in einem folgenden Ansatz in der ersten Stufe wiederverwandt. Im zweiten Fall wird im ersten Teilschritt das DMC so langsam zudosiert, dass DMC-Methanol-Gemische mit geringen DMC-Gehalten erhalten werden und im zweiten Teilschritt - nach Ansteigen des DMC-Gehaltes im Destillat - das DMC dann schnell zudosiert, so dass ein DMC-Methanol-Gemisch mit höherem DMC-Gehalt (z.B. das Azeotrop) anfällt, das in einem folgenden Ansatz wiederverwandt wird,
- gegebenenfalls Entkappung: Nutzbarmachung der endständigen OH-Gruppen durch Austragung der letzten Methanol- bzw. DMC-Reste z.B. durch Erzeugen von Gasblasen (z.B. Einleiten von inerten Gasen wie $N_2$) z.B. im leichten Vakuum (z.B. ca. 150 mbar),
- gegebenenfalls Korrektur: Korrektur der Stöchiometrie durch Zugabe weiterer Mengen der Diol-Komponenten und erneuter, kurzer Umesterung.

Im ersten Ansatz, bei dem aus vorherigen Ansätzen noch keine DMC-Methanol-Gemische zur Verfügung stehen, kann prinzipiell nur reines DMC eingesetzt werden, so dass beim Destillieren nur ein DMC-Methanol-Gemisch (z.B. das Azeotrop) anfällt, das im zweiten Ansatz in der ersten Stufe wieder eingesetzt wird, oder es wird wahlweise

ein DMC-Methanol-Gemisch (z.B. das Azeotrop) durch Mischen von DMC und Methanol hergestellt in der zu erwartenden Menge.

Eingesetzt werden im erfindungsgemäßen Verfahren aliphatische Diole mit 3 bis 20 C-Atomen in der Kette. Exemplarisch, aber nicht ausschließlich genannt seinen 1,7-Heptandiol, 1,8-Octandiol, 1,6-Hexandiol, 1,5-Pentandiol, 1,4-Butandiol, 1,3-Butandiol, 1,3-Propandiol, 2-Methyl-1,3-propandiol, 3-Methyl-1,5-pentandiol, 2-Methylpentandiol, 2,2,4-Trimethyl-1,6-hexandiol, 3,3,5-Trimethyl-1,6-hexandiol, 2,3,5-Trimethyl-1,6-hexandiol, Cyclohexandimethanol, etc. sowie Mischungen verschiedener Diole.

Weiterhin können die Additionsprodukte der Diole mit Lactonen (Esterdiole) wie z.B. Caprolacton, Valerolacton etc. eingesetzt werden, sowie Mischungen der Diole mit Lactonen, wobei eine einleitende Umesterung von Lacton und den Diolen nicht nötig ist.

Eingesetzt werden können ferner die Additionsprodukte der Diole mit Dicarbonsäuren wie z.B.: Adipinsäure, Glutarsäure, Bernsteinsäure, Malonsäure etc. oder Ester der Dicarbonsäuren sowie Mischungen der Diole mit Dicarbonsäuren bzw. Ester der Dicarbonsäuren, wobei eine einleitende Umesterung von Dicarbonsäure und den Diolen nicht nötig ist.

Eingesetzt werden können ferner Polyetherpolyole wie z.B. Polyethylenglycol, Polypropylenglycol, Polybutylenglycol sowie Polyetherpolyole, die durch Copolymerisation von z.B. Ethylenoxid und Propylenoxid erhalten wurden oder Polytetramethylengylcol, das durch ringöffnende Polymerisation von Tetrahydrofuran (THF) erhalten wurde.

Es können Mischungen verschiedener Diole, Lactone und Dicarbonsäuren eingesetzt werden.

Bevorzugt werden in dem erfindungsgemäßen Verfahren 1,6-Hexandiol, 1,5-Pentandiol und Mischungen aus 1,6-Hexandiol und Caprolacton eingesetzt.

Als Katalysatoren können prinzipiell alle für Umesterungsreaktionen bekannte, lösliche Katalysatoren (homogene Katalyse), sowie heterogene Umesterungskatalysatoren eingesetzt werden. Vorzugsweise wird das erfindungsgemäße Verfahren in Gegenwart eines Katalysators durchgeführt.

Insbesondere eignen sich für das erfindungsgemäße Verfahren Hydroxide, Oxide, Metallalkoholate, Carbonate und metallorganische Verbindungen der Metalle der I., II., III. und IV. Hauptgruppe des Periodensystems der Elemente, der III. und IV. Nebengruppe sowie die Elemente aus der Gruppe der Seltenen Erden, insbesondere die Verbindungen des Ti, Zr, Pb, Sn und Sb.

Zum Beispiel seien genannt: LiOH, $Li_2CO_3$, $K_2CO_3$, KOH, NaOH, KOMe, NaOMe, MeOMgOAc, CaO, BaO, KOt-Bu, $TiCl_4$, Titan-tetraalkoholate oder -terephthalate, Zirkonium-tetraalkoholate, Zinn-octanoate, Dibutylzinn-dilaureat, Dibutylzinnoxid. Dibutylzinn-methoxid, Bistributylzinnoxid, Zinnoxalate, Bleistearate, Antimontrioxid, Zirkonium-tetra-iso-propylat etc. Weiterhin können anorganische oder organische Säuren als Katalysatoren wie z.B. Phosphorsäure, Essigsäure, p-Toluolsulfonsäure eingesetzt werden.

Weiterhin können im erfindungsgemäßen Verfahren tertiäre Amine mit $R_1R_2R_3N$ mit $R_{1-3}$ als $C_1$-$C_{30}$-Hydroxyalkyl, -aryl oder -alkyl eingesetzt werden, besonders Trimethylamin, Triethylamin, Tributylamin, N,N-Dimethylcyclohexylamin, N,N-dimethylethanolamin, 1,8-Diazabicyclo-(5.4.0)undec-7-en, 1,4-Diazabicyclo(2.2.2)-octan, 1,2-Bis(N,N-dimethylamino)-ethan, 1,3-Bis(N,N-dimethylamino)propan und Pyridin.

Bevorzugt werden die Alkoholate und Hydroxide des Natriums und des Kaliums (NaOH, KOH, KOMe, NaOMe), die Alkoholate des Titans, Zinn oder Zirkoniums (z.B. $Ti(OPr)_4$), sowie Zinn-organische Verbindungen eingesetzt, wobei die Titan-, Zinn- und Zirkoniumtetraalkoholate bevorzugt bei Diolen, welche Esterfunktionen bzw. Mischungen von Diolen mit Lactonen enthalten, eingesetzt werden.

Im erfindungsgemäßen Verfahren wird gegebenenfalls der homogene Katalysator in Konzentrationen (angegeben in Gewichtsprozent Metall bezogen auf eingesetztes aliphatisches Diol) bis zu 1000 ppm (0,1 %), bevorzugt zwischen 1 ppm und 500 ppm, besonders bevorzugt 5 bis 100 ppm, eingesetzt. Der Katalysator kann nach Abschluss der Reaktion im Produkt belassen, abgetrennt, neutralisiert oder maskiert werden. Vorzugsweise wird der Katalysator im Produkt belassen.

Die Austragung des Methanols zur Entkappung der Endgruppen kann z.B. durch Erhitzen der Reaktionslösung im Vakuum, bevorzugt durch Erzeugung von Gasblasen in der Apparatur erfolgen. Diese Gasblasen können durch Einleiten von inerten Gasen wie Stickstoff, Argon, Methan, Ethan, Propan, Butan, Dimethylether, trockenem Erdgas oder trockenem Wasserstoff in den Reaktor erzeugt werden, wobei der das Oligocarbonat verlassende, Methanol- und Dimethylcarbonat-haltige Gasstrom teilweise zur Sättigung erneut dem Oligocarbonat zugeführt werden kann. Bevorzugt wird Stickstoff eingesetzt.

Diese Gasblasen können ferner durch Einleiten von inerten leichtsiedenden Flüssigkeiten wie Pentan, Cyclopentan, Hexan, Cyclohexan, Petrolether, Diethylether oder Methyl-tert-Butylether erzeugt werden, wobei die Stoffe flüssig oder gasförmig eingeleitet werden können und der das Oligocarbonat verlassende, Methanol- und Dimethylcarbonat-haltige Gasstrom teilweise zur Sättigung erneut dem Oligocarbonat zugeführt werden kann.

Die Stoffe zur Erzeugung von Gasblasen können über einfache Tauchrohre, bevorzugt mittels Ringdüsen oder Begasungsrührern in das Oligocarbonat eingebracht werden. Der erreichte Nutzungsgrad der endständigen OH-Gruppen ist abhängig von der Zeitdauer der Entkappung, und von der Menge, Größe und Verteilung der Gasblasen:

Mit zunehmender Zeitdauer der Entkappung und besserer Verteilung (z.B. bessere Verteilung und größere Phasengrenzfläche durch größere Anzahl an kleineren Gasblasen beim Einleiten über einen Begasungsrührer) wird der Nutzungsgrad besser. Bei Einleitung z.B. von Stickstoff (150 mbar, 40 Nl/b) über einen Begasungsrührer wird nach einer Stunde ein Nutzungsgrad von ca. 99 %, nach ca. 5 bis 10 Stunden von ca. 99,8 % erreicht.

Die Entkappung durch Erzeugung von inerten Gasblasen im Oligocarbonatdiol wird bei Temperaturen von 130°C bis 300°C, bevorzugt bei Temperaturen von 200°C bis 240°C, bei Drücken von 0,01 bis 1000 mbar, bevorzugt bei Drücken von 30 bis 400 mbar, besonders bevorzugt bei Drücken von 70 bis 200 mbar durchgeführt.

Das Molekulargewicht der nach dem erfindungsgemäßen Verfahren hergestellten Oligocarbonatdiole wird über das molare Verhältnis von Diol zu DMC eingestellt, wobei das molare Verhältnis von Diol/DMC zwischen 1,01 und 2,0 bevorzugt zwischen 1,02 und 1,8, und besonders bevorzugt zwischen 1,05 und 1,6 liegen kann. Das angegebene Verhältnis beschreibt naturgemäß die Stöchiometrie des Produktes, d. h. das effektive Verhältnis von Diol zu DMC nach Abdestillation der DMC-Methanol-Gemische. Die DMC-Mengen, die jeweils eingesetzt werden, sind aufgrund der azeotropen Destillation des DMCs entsprechend höher. Die berechneten Molekulargewichte der nach dem erfindungsgemäßen Verfahren hergestellten Oligocarbonatdiole liegen dann z.B. im Falle von 1,6-Hexandiol als Diol-Komponente zwischen 260 und 15000 g/mol, bevorzugt zwischen 300 und 7300 g/mol, besonders bevorzugt zwischen 350 und 3000 g/mol. Wird ein vom Molekulargewicht schwereres bzw. leichteres Diol eingesetzt, so sind die Molekulargewichte der erfindungsgemäß hergestellten Oligocarbonatdiole dementsprechend höher bzw. niedriger.

Das erfindungsgemäße Verfahren erlaubt, Oligocarbonatdiole der Formel **II** mit Kohlenstoffzahlen in der Kette zwischen 7 und 1300, bevorzugt zwischen 9 und 600, besonders bevorzugt zwischen 11 und 300 herzustellen, in welcher R1 dabei als Symbol für aliphatische Diole mit einer Kohlenstoffzahl in der Kette zwischen 3 und 50, bevorzugt zwischen 4 und 40, besonders bevorzugt zwischen 4 und 20 steht.

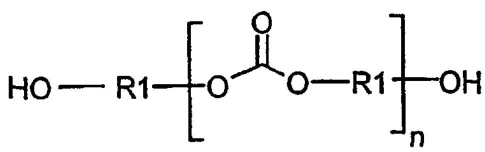

(II)

Die Diole können zusätzlich Ester, Ether, Amid und/oder Nitril-Funktionen enthalten. Bevorzugt werden Diole oder Diole mit Ester-Funktionen, wie sie z.B. durch den Einsatz von Caprolacton und 1,6-Hexandiol erhalten werden, eingesetzt. Werden zwei oder mehr Diol-Komponenten eingesetzt (z. B. Mischungen aus verschiedenen Diolen oder Mischungen von Diolen mit Lactonen), so können sich zwei benachbarte Gruppen R1 in einem Molekül durchaus unterscheiden (statistische Verteilung).

Das erfindungsgemäße Verfahren erlaubt die reproduzierbare Produktion von hochwertigen Oligocarbonatdiolen aus DMC mit guten Raumzeitausbeuten unter hohen Umsätzen des DMCs.

Die nach dem erfindungsgemäßen Verfahren hergestellten Oligocarbonatdiole können beispielsweise zur Herstellung von Kunststoffen, Fasern, Beschichtungen, Lacken und Klebstoffen, zum Beispiel durch Umsetzung mit Isocyanaten, Epoxiden, (cyclischen) Estern, Säuren oder Säureanhydriden verwendet werden. Sie können als Bindemittel, Bindemittelbestandteil und/oder Reaktivverdünner in Polyurethanbeschichtungen verwendet werden. Sie eignen sich als Baustein für feuchtigkeitshärtende Beschichtungen, als Bindemittel oder Bindemittelbestandteil in lösemittelhaltigen oder wässrigen Polyurethanbeschichtungen. Sie können weiterhin als Baustein für freie NCO-Gruppen enthaltende Polyurethanprepolymere oder in Polyurethandispersionen eingesetzt werden.

Die nach dem erfindungsgemäßen Verfahren hergestellten Oligocarbonatdiole können auch zur Herstellung thermoplastischer Kunststoffe wie aliphatische und/oder aromatische Polycarbonate, thermoplastischer Polyurethane etc. eingesetzt werden.

**Beispiel 1** **Normaldruck-Apparatur**

Die Normaldruck-Experimente wurden durchgeführt in einem 6 Liter doppelwandigen, zylindrischen, ölbeheizbaren Planschlifftopf mit Bodenablass. Über einen Planschliffdeckel ist der Reaktionstopf mit einem Stahl-Begasungsrührer ausgerüstet. Der Begasungsrührer kann dabei entweder die Gasphase im Reaktionsraum ansaugen und wieder umpumpen, oder nur frischen Stickstoff von außen in die Reaktionslösung einleiten. Ausgetriebenes Gas wird dann aus dem Reaktor entfernt und nicht wieder umgepumpt. Der Reaktionstopf wird während der gesamten Reaktionszeit mit Stickstoff inertisiert. Die DMC-Zufuhr (bzw. Zufuhr von DMC-MeOH-Gemischen) erfolgt über eine Telabpumpe durch den Planschliffdeckel über ein Tauchrohr.

Auf den Planschliffdeckel werden wahlweise eine 22 cm Vigreux-Kolonne bzw. eine 90 cm Füllkörperkolonne,

gefüllt mit Raschigringen (Glas, 4x4 mm), gefolgt von einer Claisenbrücke mit Auffangkolben, Gaswaschflasche und Kühlfallen gesetzt, oder zur Vakuumbehandlung direkt eine Claisenbrücke, Gaswaschflasche, 3 Kühlfallen in Reihe und eine Drehschiebervakuumpumpe, mit der Vakua von 15 mbar erreicht werden können.

Die Bestimmung der DMC-Gehalte der Destillate geschah durch analytische GC. Alle Prozentangaben sind Gewichtsprozente.

Die Bestimmung des Nutzungsgrades der endständigen OH-Gruppen geschah durch Ermittlung des als Ester vorliegenden Methanols: Nach vollständiger Verseifung des jeweiligen Oligocarbonatdiols wurde der Methanol-Gehalt durch analytische GC (Headspace) bestimmt. Die Differenz zum Methanol-Gehalt vor der Verseifung ergibt den als Ester gebundenen Methanolgehalt.

**Beispiel 2** **Herstellung eines Oligocarbonatesterdiols mit mehrmaligem Nachfahren von DMC**

Ziel ist die Herstellung eines Oligocarbonatesterdiols aus Hexandiol-1,6 und ε-Caprolacton mit einem vorgegebenem Verhältnis von Diol zu Carbonat von 8:7.

Die Apparatur ist in **Beispiel 1** beschrieben. Eingewogen werden in den Reaktionstopf 1890,84 g Hexandiol-1,6 (16 mol), 1826,33 g ε-Caprolacton (16 mol) und 0,37 g Titan-tetraisopropylat (17 ppm Ti bezogen auf die Diol-Komponenten). Die Diolkomponenten werden aufgeschmolzen, homogenisiert und unter Stickstoff auf 160°C erhitzt. Für die Umsetzung werden insgesamt 1261,12 g DMC (14 mol) benötigt, die in einer zweistufigen Fahrweise zugegeben werden.

In der 1. Stufe wird ein Gemisch von 281,3 g DMC und 600,3g MeOH eingesetzt (881,6 g Lösung mit 31,91 % DMC), das in einem vorherigen Reaktionsansatz azeotrop abdestilliert wurde. Dieses Gemisch wird innerhalb von 24,5 h bei 160°C und Normaldruck zugefahren. Über die kurze 22 cm-Vigreux-Kolonne werden 677,65 g eines Gemisch von DMC/MeOH abdestilliert, das 7,83 % DMC enthält (53,03 g DMC)

In der zweiten Stufe werden 980,07 g DMC innerhalb von 8 Stunden zudosiert. Dabei werden über die lange 90 cm Füllkörperkolonne 825,5 g eines DMC/MeOH-Gemisches abdestilliert, das 35,29 % DMC enthält (291,36 g DMC).

In den beiden Stufen wurden demnach 344,39 g DMC abdestilliert, die zur gewünschten Stöchiometrie fehlen. Daher wurden innerhalb von 3,5 h bei 160°C insgesamt 408,0 g DMC nachgefahren. Nach Beendigung des Zufahrens wurde zur Vervollständigung der Reaktion der Ansatz auf 200°C erwärmt. Über die große Kolonne wurde insgesamt ein Gemisch von 175,20 g DMC/MeOH abdestilliert, das 32,91 % DMC enthielt (57,66 g DMC). Es wurden bei 200°C weitere 10,0 g DMC innerhalb von 8 Minuten nachgefahren. Abdestilliert wurden 6,9 g DMC/MeOH-Gemisch mit 31,02 % DMC (2,14 g DMC). Demnach wurden insgesamt 13,81 g DMC zuviel zudosiert.

Zur Austreibung der letzten Methanol-Reste und zur Nutzbarmachung der endständigen OH-Gruppen wurde bei 150 mbar zunächst zwei Stunden lang 1 l/h Stickstoff, dann 4 Stunden 2 l/h $N_2$ und danach 5 Stunden 40 l/h $N_2$ Stickstoff durch den Begasungsrührer, der mit 480 U/min betrieben wurde, in die Reaktionslösung eingeleitet. Abdestilliert wurden dabei insgesamt 277,3 g eines DMC-MeOH-Gemisches mit 12,6 % DMC (35,09 g DMC). Demnach fehlen 21,28 g DMC zur vorgegebenen Stöchiometrie.

Erhalten wurde ein klares, leicht gelbliches Produkt mit einem Nutzungsgrad der endständigen OH-Gruppen von 99,1 %.

**Beispiel 3** **Herstellung eines Oligocarbonatesterdiols durch einmaliges Zufahren von DMC.**

Ziel ist die wiederum die Herstellung eines Oligocarbonatesterdiols aus Hexandiol-1,6 und ε-Caprolacton, wobei die komplette DMC-Menge in der 2. Stufe zugegeben werden soll. Die vorgegebene Stöchiometrie wird wiederum durch das Diol-Carbonat-Verhältnis von 1,143 bestimmt, was zu einem Produkt führt, das ein berechnetes, durchschnittliches Molekulargewicht von 2040 g/mol und eine OH-Zahl von 55 aufweist.

Die Apparatur ist in **Beispiel 1** beschrieben. Die Rührergeschwindigkeit wurde auf 1500 $min^{-1}$ erhöht. Eingewogen wurden in den Reaktionstopf 1890,84 g Hexandiol-1,6 (16 mol), 1826,33 g ε-Caprolacton (16 mol) und 0,37 g Titan-tetraisopropylat (17 ppm Ti bezogen auf die Diol-Komponenten). Die Diolkomponenten wurden aufgeschmolzen, homogenisiert und unter Stickstoff auf 160°C erhitzt. Für die Umsetzung wurden insgesamt 1261,12 g DMC (14 mol) benötigt, die in einer zweistufigen Fahrweise zugegeben wurden.

In der 1. Stufe wurde ein Gemisch von 281,3 g DMC und 600,3g MeOH eingesetzt (881,6 g Lösung mit 31,91 % DMC). Dieses Gemisch wurde innerhalb von 24,75 h bei 160°C und Normaldruck zugefahren. Über die kurze 22 cm-Vigreux-Kolonne wurden 558,02 g eines Gemisch von DMC/MeOH abdestilliert, das 6,43 % DMC enthält (35,89 g DMC).

In der zweiten Stufe wurden 1380,07 g DMC innerhalb von 13 Stunden zudosiert. Die Temperatur des Reaktors wurde anschließend auf 200°C erhöht und weitere 2 Stunden destilliert. Über die lange 90 cm Füllkörperkolonne wurden so 1007,00 g eines DMC/MeOH-Gemisches abdestilliert, das 32,21 % DMC enthält (324,39 g DMC).

Insgesamt wurden in den beiden Stufen 1661,37 g DMC zudosiert. Abdestilliert wurden 360,28 g, so dass noch ein Überschuss von 39,97 g DMC vorhanden ist.

Zur Nutzbarmachung der endständigen OH-Gruppen wurde bei 200°C und 150 mbar zunächst 2 Stunden lang 1 l/h Stickstoff, dann 4 Stunden 2 l/h $N_2$ und danach 7 Stunden 40 l/h $N_2$ durch den Begasungsrührer in die Reaktionslösung eingeleitet. Abdestilliert wurden so insgesamt 228,1 g eines DMC-Methanol-Gemisches mit 10,19 % DMC (23,25 g DMC). Demnach wurden insgesamt 16,72 g DMC zuviel zugegeben.

Ein Teil des Produktes (1391 g) wurde durch das Bodenablassventil entnommen und untersucht. Erwartungsgemäß wird durch den Überschuss an DMC ein Produkt mit zu hoher Viskosität und zu niedriger OH-Zahl (37) erhalten. Der Nutzungsgrad der endständigen OH-Gruppen lag bei ca. 99,9 %.

**Beispiel 4** **Herstellung eines Oligocarbonatesterdiols einer vorgegebenen Stöchiometrie durch Einsatz eines Überschusses an DMC und Korrektur durch Zugabe der Diol-Komponente**

Das Produkt aus Beispiel 3 wurde durch Zugabe von weiteren Diolkomponenten auf die gewünschte Stöchiometrie eingestellt. Da ein Teil des Produktes (ca. 38 %) bereits abgenommen wurde, wurde der Überschuss an DMC im verbliebenen Teil auf 10,34 g berechnet. Um diesen Überschuss weiter umzusetzen, wurden demnach stöchiometrisch weitere 15,5 g Adipol und 15,0 g ε-Caprolacton zugegeben. Die Reaktionslösung wurde danach 5 h bei 160°C unter Stickstoffatmosphäre gerührt. Nach Abkühlung konnte so ein klares, fast farbloses Produkt erhalten werden (2574 g) mit folgenden Kennzahlen: OH-Zahl: 54, Nutzungsgrad der endständigen OH-Gruppen: 99,8 %.

**Beispiele 5 - 7** **Absenken des DMC-Gehaltes im abdestillierten Methanol durch eine dreistufige Fahrweise.**

In der im **Beispiel 1** beschriebenen Apparatur wurden 630,28 g Hexandiol-1,6 (5,33 mol ), 608,78 g ε-Caprolacton (5,33 mol) und 0,12 g Titan-tetraisopropylat (17 ppm Ti bezogen auf die Diol-Komponenten) eingewogen, aufgeschmolzen, homogenisiert und unter Stickstoff auf 160°C erhitzt. Innerhalb von 4 Stunden wurden 183 g eines DMC-Methanol-Gemisches, das 4,92 % DMC enthielt (9,0 g DMC), zugefahren. Abdestilliert wurde ein DMC-Methanol-Gemisch, das 3,0 % DMC enthielt.

In einem 2. Versuch wurde das 4,92 %-ige DMC-Methanol-Gemisch innerhalb von 8 Stunden zugefahren. Abdestilliert wurde ein DMC-Methanol-Gemisch mit 2,60 % DMC. In einem 3. Versuch wurde das Gemisch innerhalb von 12 Stunden zugefahren, wobei als Destillat ein DMC-Methanol-Gemisch mit 1,50 % erhalten wurde.

Die DMC-Gehalte können demnach durch Einsatz des ca. 5 %igen DMC-Methanol-Gemisches, das in der zweiten Stufe eines dreistufigen Verfahrens abdestilliert wird, in der ersten Stufe eines dreistufigen Verfahrens auf 1,5 bis 3 % reduziert werden.

**Beispiel 8** **Herstellung eines Oligocarbonatdiols durch mehrfaches Umpumpen des Destillates**

In der in **Beispiel 1** beschriebenen Apparatur wurden 1890,84 g 1,6-Hexandiol (16 Mol) und 0,18 g Titantetraisopropylat (17 ppm Ti) vorgelegt und aufgeschmolzen. In der ersten Stufe sollten 881,6 g eines DMC-Methanol-Gemisches mit 31,9 % DMC (281,3 g DMC) bei 160°C innerhalb von 25 Stunden durch 12-faches Umpumpen zugefahren werden: Dazu wurde das gesamte DMC-Methanol-Gemisch innerhalb von 2 Stunden zugefahren. Dabei fiel ein Destillat an, das noch 27,5 % DMC enthielt. Dieses Destillat wurde anschließend erneut innerhalb von 2 Stunden zugefahren und lieferte abermals ein DMC-ärmeres Destillat (23,7 %). Dieser Vorgang wurde noch 10 Mal wiederholt. Mit jedem Schritt wurde das DMC des Destillates weiter abgereichert (siehe Tabelle 1). Nach dem 12. Umpumpen wurde so ein DMC-Gehalt von 5,9 % erreicht. Die zweite Stufe des Verfahrens (Zufahren von DMC) wurde nicht mehr durchgeführt.

Table 1:

| DMC-Gehalte im Destillat bei mehrfachem Umpumpen | | | | |
|---|---|---|---|---|
| Destillat Nr. | DMC-Gehalt [%] | Destillat-Menge [g] | Pumpe [ml/h] | Zeit [h] |
| 1 | 27,54 | 788,7 | 515 | 2:15 |
| 2 | 23,65 | 772,8 | 515 | 4:20 |
| 3 | 20,30 | 761,0 | 515 | 6:24 |
| 4 | 17,17 | 774,1 | 515 | 8:53 |

Table 1: (fortgesetzt)

| DMC-Gehalte im Destillat bei mehrfachem Umpumpen | | | | |
|---|---|---|---|---|
| Destillat Nr. | DMC-Gehalt [%] | Destillat-Menge [g] | Pumpe [ml/h] | Zeit [h] |
| 5 | 14,55 | 750,9 | 515 | 10:56 |
| 6 | 12,65 | 748,9 | 515 | 12:54 |
| 7 | 10,99 | 744,9 | 515 | 14:58 |
| 8 | 9,59 | 740,0 | 515 | 17:10 |
| 9 | 8,32 | 723,3 | 515 | 19:02 |
| 10 | 7,36 | 729,1 | 515 | 21:12 |
| 11 | 6,54 | 717,8 | 515 | 23:17 |
| 12 | 5,85 | 713,8 | 515 | 25:11 |

Zum Vergleich wurde der Versuch mit einer Katalysator-Konzentration von 250 ppm Ti (0,025 % Ti, entspricht 2,84 g Titan-tetraisopropylat) wiederholt. Nach dem ersten Zufahren des DMC-Methanol-Gemisches mit 31,9 % DMC mit derselben Pumpengeschwindigkeit wurde nach ca. 2 Stunden ein Destillat mit 12,2 % DMC erhalten, das erneut eingesetzt wurde. Tabelle 2 gibt die DMC-Gehalte der Destillate an. Schon nach 3 Umläufen wurde das DMC auf 3,5 % abgereichert, nach 4 Umläufen nach ca. 6 Stunden auf 2,6 %.

Table 2:

| DMC-Gehalte im Destillat bei mehrfachem Umpumpen | | | | |
|---|---|---|---|---|
| Destillat Nr. | DMC-Gehalt [%] | Destillat-Menge [g] | Pumpe [ml/h] | Zeit [h] |
| 1 | 12,16 | 442,2 | 515 | 2:09 |
| 2 | 5,83 | 398,1 | 515 | 3:37 |
| 3 | 3,51 | 424,9 | 515 | 4:42 |
| 4 | 2,62 | 414,7 | 515 | 5:56 |
| 5 | 2,65 | 412,0 | 515 | 7:01 |
| 6 | 2,42 | 383,5 | 515 | 8:08 |
| 7 | 2,41 | 383,7 | 515 | 9:15 |
| 8 | 2,39 | 395,6 | 515 | 10:24 |
| 9 | 2,35 | 396,6 | 515 | 11:33 |

**Beispiel 9** **Herstellung eines Oligocarbonatesterdiols auf Basis von 1,5-Pentandiol**

In der im **Beispiel 1** beschriebenen Apparatur wurden 1666,40 g Pentandiol-1,5 (16 mol ), 1826,33 g ε-Caprolacton (16 mol) und 0,37 g Ti-isopropylat (17 ppm Ti bezogen auf die Diol-Komponenten). Die Diolkomponenten wurden aufgeschmolzen, homogenisiert und unter Stickstoff auf 160°C erhitzt. Für die Umsetzung wurden insgesamt 1261,12 g DMC (14 mol) benötigt, die in einer zweistufigen Fahrweise zugegeben wurden.

In der 1. Stufe wurde ein Gemisch von 281,3 g DMC und 600,3 g MeOH eingesetzt (881,6 g Lösung mit 31,91 % DMC). Dieses Gemisch wurde innerhalb von 24,5 h bei 160°C und Normaldruck zugefahren. Über die kurze 22 cm-Vigreux-Kolonne wurden 688,18 g eines Gemisch von DMC/MeOH abdestilliert, das 6,34 % DMC enthält (43,65 g DMC)

In der zweiten Stufe wurden 1330,07 g DMC innerhalb von 6,5 Stunden zudosiert. Die Temperatur des Reaktors wurde anschließend auf 200°C erhöht und weitere 2 Stunden destilliert. Über die lange 90 cm Füllkörperkolonne wurden so 1975,84 g eines DMC/MeOH-Gemisches abdestilliert, das 33,92 % DMC enthält (331,04 g DMC).

Da an der vorgegebenen Stöchiometrie damit insgesamt 24,44 g DMC fehlen, wurden bei 200°C noch 60,0 g DMC nachgefahren. Dabei wurden 34,6 g eines DMC-Methanol-Gemisches mit 27,84 % DMC (9,63 g DMC) abdestilliert.

Zur Nutzbarmachung der endständigen OH-Gruppen wurde bei 200°C und 150 mbar zunächst 2 Stunden lang 1 l/h Stickstoff, dann 4 Stunden 2 l/h $N_2$ und danach 5 Stunden 40 l/h $N_2$ durch den Begasungsrührer in die Reaktionslösung eingeleitet. Abdestilliert wurden so insgesamt 208,2 g eines DMC-Methanol-Gemisches mit 9,66 % DMC (20,12 g DMC). Demnach wurden insgesamt 5,81 g DMC zuviel zugegeben.

Erhalten wurden 4086,8 g eines leicht hellgelben Produktes mit einer OH-Zahl von 62. Der Nutzungsgrad der endständigen OH-Gruppen lag bei 99,9 %.

**Beispiel 10** **Druckapparatur**

Die Druckversuche wurden in einem 2 l-Autoklaven durchgeführt, der mit einem elektrischen Rührer und einem Tauchrohr zur DMC-Einleitung ausgestattet war. Stickstoff kann wahlweise zur Inertisierung über die Reaktionslösung, bzw. zum Entkappen der Endgruppen durch das Tauchrohr in die Reaktionslösung eingeleitet werden. Das abdestillierte Gasgemisch wird über zwei Füllkörperkolonnen (25 cm bzw. 80 cm lang), die wahlweise betrieben werden und über einen Wasserthermostaten bis auf 90°C beheizt werden können, aufgetrennt und in einem Rückflusskühler kondensiert. Über ein Druckhalte-Ventil wird das Produkt aus der Anlage ausgeschleust. Der Druck in der Apparatur wird über den eingeleiteten Stickstoff aufgebaut: Über einen Massendurchflussregler wird die einzuleitende Stickstoffmenge eingestellt (Minimum 2 l/h), über eine Druckmessung in der Anlage wird das Druckhalte-Ventil automatisch so gesteuert, dass nur die Stickstoff-Menge ausgespeist wird, dass der Druck konstant bleibt. Gebildetes Destillat wird zusammen mit dem Stickstoff ausgeschleust.

**Beispiel 11** **Herstellung eines Oligocarbonatesterdiols unter Druck.**

Hergestellt werden soll ein Oligocarbonatesterdiol aus Hexandiol und ε-Caprolacton mit einem vorgegebenem Verhältnis von Diol zu Carbonat = 8:7.

In der im Beispiel 10 beschriebenen Apparatur wurden 630,28 g Hexandiol-1,6 (5,33 mol ), 608,78 g ε-Caprolacton (5,33 mol) und 0,123 g Ti-isopropylat (17 ppm Ti bezogen auf die Diol-Komponenten) eingewogen. Der Autoklav wurde mit 3 l/h Stickstoff unter Druck gesetzt (2 bar). Die Diolkomponenten wurden aufgeschmolzen, homogenisiert und auf 180°C erhitzt. Für die Umsetzung wurden insgesamt 420,36 g DMC (4,67 mol) benötigt, die in einer zweistufigen Fahrweise zugegeben wurden.

In der 1. Stufe wurde ein Gemisch von 39,40 g DMC und 179,0 g MeOH eingesetzt (218,4 g Lösung mit 18,04 % DMC). Dieses Gemisch wurde innerhalb von 10 h bei 2 bar und 180°C Innentemperatur zudosiert. Über die kleine Kolonne (25 cm, 80°C) wurden 96,1 g eines Gemisch von DMC/MeOH abdestilliert, das 3,64 % DMC enthält (3,50 g DMC). In einer deutlich kürzeren Zeit werden also geringe DMC-Gehalte im Destillat erreicht als bei den Normaldruck-Versuchen.

In der zweiten Stufe wurden 437,20 g DMC innerhalb von 7 Stunden bei 180°C zudosiert. Das DMC-Methanol-Azeotrops wurde über die große Kolonne (80 cm, 80°C) abdestilliert. Nach Zugabe des DMCs wurde die Reaktortemperatur auf 200°C, die Kolonnentemperatur auf 85°C angehoben und weitere 3 Stunden destilliert. Es wurden weitere 20 g DMC zugefahren und 2 Stunden destilliert. Insgesamt wurden 337,40 g eines DMC-Methanol-Gemisches abdestilliert, das 19,62 % DMC enthielt (66,21 g DMC).

Die Nutzbarmachung der Endgruppen geschah durch Einleiten von 25 l/h Stickstoff durch das einfache Tauchrohr bei 70 mbar innerhalb einer Zeitspanne von 40 h. Dabei wurden 54,50 g eines DMC-Methanol-Gemisches mit 11,97 % DMC abdestilliert (6,52 g).

Erhalten wurde ein Produkt, mit einer OH-Zahl von 80 und einem Nutzungsgrad der Endgruppen von 99,8 %.

**Beispiel 12** **Herstellung eines Oligocarbonatdiols unter Druck.**

Hergestellt werden sollte ein Oligocarbonatdiol aus Hexandiol mit einem vorgegebenem Verhältnis von Diol zu Carbonat = 1,294

In der im Beispiel 10 beschriebenen Apparatur wurden 822,9 g Hexandiol-1,6 (6,96 mol) und 82 mg Ti-isopropylat (17 ppm Ti bezogen auf die Diol-Komponente) eingewogen. Der Autoklav wurde mit 3 l/h Stickstoff unter Druck gesetzt (2 bar). Die Diolkomponenten wurden aufgeschmolzen, homogenisiert und auf 184°C erhitzt. Für die Umsetzung wurden insgesamt 484,9 g DMC (5,38 mol) benötigt, die in einer zweistufigen Fahrweise zugegeben wurden.

In der 1. Stufe wurden 264,45 g eines DMC-Methanol-Gemisches mit 18,04 % DMC (47,7 g DMC) innerhalb von 10 h bei 2 bar und 184°C Innentemperatur zudosiert. Über die kleine Kolonne (25 cm), die auf 80°C beheizt wurde, wurden 165,3 g eines Gemisch von DMC/MeOH abdestilliert, das 5,35 % DMC enthält (8,85 g DMC).

In der zweiten Stufe wurden 515,2 g DMC innerhalb von 6,7 Stunden bei 184°C zudosiert und danach 15 g innerhalb von 10 Minuten bei 198°C. Das DMC-Methanol-Azeotrop wurde über die große Kolonne (80 cm, 80°C) abdestilliert. Insgesamt wurden 402,10 g eines DMC-Methanol-Gemisches abdestilliert, das 17,90 % DMC enthielt

(71,99 g DMC).

Die Nutzbarmachung der Endgruppen geschah durch Einleiten von 5 l/h Stickstoff durch das einfache Tauchrohr bei 70 mbar und 200°C innerhalb einer Zeitspanne von 26 h. Dabei wurden 30,90 g eines DMC-Methanol-Gemisches mit 5,73 % DMC abdestilliert (1,77 g)

Erhalten wurde ein Produkt, mit einer OH-Zahl von 255, einem Schmelzpunkt von 38 °C und einem Nutzungsgrad der Endgruppen von 99,8 %.

**Beispiel 13 Variation der Katalysator-Konzentration**

Der Versuch aus Beispiel 3 wurde wiederholt unter Halbierung der Katalysatorkonzentration (0,186 g Titantetraisopropylat, 8 ppm Ti). Beim Zufahren des DMC-Methanol-Gemisches (881,6 g, 31,91 % DMC) in der ersten Stufe des erfindungsgemäßen Verfahrens innerhalb von 24 Stunden bei 160°C wurde ein DMC-ärmeres Gemisch mit ca. 10,2 % DMC erhalten.

Der Versuch wurde bei 185°C wiederholt. Beim Zufahren des DMC-Methanol-Gemisches (31,91 % DMC) in der ersten Stufe innerhalb von 24 Stunden wurde ein Destillat mit 8,0 % DMC erhalten.

Bei 195°C wurde beim Zufahren des DMC-Methanol-Gemisches (31,91 % DMC) ein Destillat mit 6,7 % DMC erhalten.

**Beispiel 14 Herstellung eines Oligocarbonatesterdiols unter Druck**

Ziel ist die Herstellung eines Oligocarbonatesterdiols aus Hexandiol-1,6 und ε-Caprolacton im technischen Maßstab. Die vorgegebene Stöchiometrie wird durch das Diol-Carbonat-Verhältnis von 1,143 bestimmt, was zu einem Produkt führt, das ein berechnetes, durchschnittliches Molekulargewicht von ca. 2040 g/mol und eine OH-Zahl von 55 aufweist.

Ein 200 1-Rührkessel mit Blattrührer wurde mit einer 2,5 m langen Füllkörperkolonne (∅ 11 cm, gefüllt mit Prallkörpern), aufgesetztem Kühler und einer 100 l Vorlage ausgerüstet. In der Vorlage aufgefangene Destillate können über eine Pumpe Unterspiegel über einen Bodenflansch wieder in den Reaktor geleitet werden.

Im Reaktor wurden 62,353 kg Adipol (0,528 kmol), 60,226 kg Caprolacton (0,528 kmol) und 12 g Titantetraisopropylat (17 ppm Ti) vorgelegt, mit Stickstoff inertisiert, auf 80°C aufgeheizt und homogenisiert. Zum Erreichen der vorgegebenen Stöchiometrie sind demnach 41,612 kg DMC (0,462 kmol) nötig.

In die Vorlage wurden 44 kg des DMC-Methanol-Gemisches aus dem vorherigen Ansatz (23,0 % DMC, 10,1 kg DMC) eingefüllt. Der Druck in der Anlage wurde auf 5,2 bar eingestellt und dann weiter auf 194°C aufgeheizt.

Das DMC-Methanol-Gemisch aus der Vorlage wurde innerhalb einer Stunde Unterspiegel in den Rührkessel dosiert (Pumpengeschwindigkeit ca. 40 l/h). Während des Zudosierens anfallendes Destillat wurde direkt wieder in die Vorlage geleitet, wo es sich mit dem ursprünglichen DMC-Methanol-Gemisch aus dem vorherigen Ansatz vermischte. Dieses Gemisch wurde weitere drei Stunden im Kreislauf gefahren. Es wurde also kontinuierlich DMC-Methanol-Gemisch in den Reaktor dosiert, wobei ein DMC-ärmeres Gemisch abdestilliert und im gleichen Vorratsbehälter aufgefangen wurde, so dass die DMC-Konzentration mit der Zeit absank. Nach insgesamt 4 Stunden wurde die Zudosierung gestoppt und für weitere 2 Stunden destilliert.

Dieses Destillat wurde dann in der Vorlage aufgefangen und verworfen. Erhalten wurde ein DMC-Methanol-Gemisch (42,0 kg) mit 5,3 % DMC (2,2 kg).

In die Vorlage wurden anschließend 47,0 kg DMC gegeben. Das DMC wurde bei 196°C innerhalb von einer Stunde in den Kessel gefahren und dann - wie zuvor beschrieben - fünf Stunden im Kreislauf gepumpt. Das Destillat wurde danach innerhalb von 2 Stunden bei 200 °C aufgefangen. Angefallen sind 51,1 kg eines DMC-Methanol-Gemisches mit 25,3 % DMC (12,9 kg DMC).

Die Anlage wurde dann auf Normaldruck entspannt, der Druck langsam auf 100 mbar reduziert und zur Entkappung der Endgruppen insgesamt 32 Stunden lang Reste von Methanol abdestilliert.

Nach Abzug des Vorlaufs und verbliebenen Resten im Reaktor wurden 116 kg eines klaren, schwach gelblich gefärbten Produktes erhalten. Die OH-Zahl betrug 58. Eine Korrektur durch Zugabe von weiteren Mengen des Diols wurde nicht durchgeführt. Der Nutzungsgrad der endständigen OH-Gruppen betrug 99,6 %.

**Detaillierte Analyse der DE-A 198 29 593**

Laut DE-A 198 29 593 wird eine Diolkomponente vorgelegt und durch Zufuhr von DMC und Abdestillation von Methanol ein Oligocarbonatdiol erhalten. Die Reaktionsdauer beträgt ca. 4 Stunden (Beispiel 1 und 2). Im Destillat werden molare Verhältnisse von Methanol zu DMC von 0,5 : 1 bis 99 : 1 erreicht (Anspruch 1c). Dies entspricht DMC-Gehalten von 85 bis 2,8 Gewichtsprozent.

In der DE-A 198 29 593 wird nicht beschrieben, dass die eingesetzte DMC-Menge durch azeotrop abdestilliertes DMC verringert wird und dadurch nicht mehr mit der vorgegebenen Stöchiometrie übereinstimmt und dementsprechend korrigiert werden muss.

Dass in der Tat beachtliche Mengen an DMC abdestilliert und durch Korrektur ersetzt werden, kann aus den Beispielen abgeleitet werden:

So wird im Beispiel 1 aus 918 kg (3920 mol, MG = 234,2 g/mol) eines Diols (PolyTHF) und 440 kg DMC (4885 mol, 90,1 g/mol) ein Oligocarbonatdiol hergestellt. Das Carbonat wird hier molar im Überschuss zugegeben. Durch das umgekehrte Verhältnis von Diol zu DMC sollte also ein Oligomer hergestellt werden, dessen Endgruppen aus Methoxycarbonyl-Endgruppen, wie in Formel **III** beschrieben, bestehen sollten, wobei R1 als Symbol für $-(CH_2)_4-$ steht.

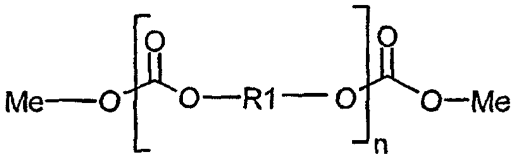

(III)

Ein Oligocarbonatdiol mit endständigen OH-Gruppen, wie es als Endprodukt erhalten wurde, kann nur dadurch entstanden sein, dass bei der Destillation des Methanols soviel DMC verloren gegangen ist, dass die Mengenverhältnisse von DMC und Diol sich wieder umgekehrt haben, d.h. dass effektiv mehr Diol als DMC eingesetzt wurde. Es muss also mindestens eine Menge von 965 mol (4885-3920) DMC (87 kg) abdestilliert worden sein. Dies entspricht ca. 20 % des eingesetzten DMCs. Nach Abdestillation dieser Menge wird jedoch nur der Gelpunkt erreicht, was zu einer vollständigen Polymerisation führen sollte. Um das entstandene Oligocarbonatdiol zu erreichen, muss eine noch größere Menge abdestilliert worden sein.

Aus der ermittelten OH-Zahl des entstandenen Diols lassen sich die effektiven Mengenverhältnisse berechnen:

Nach Formel **IV**, in der n für die OH-Funktionalität des Oligomers steht (hier: n = 2), lässt sich aus der OH-Zahl das durchschnittliche Molekulargewicht bestimmen.

$$\text{Molekulargewicht} = (56106 \cdot n) / \text{OH-Zahl} \qquad (IV)$$

Aus der OH-Zahl des entstandenen Oligocarbonatdiols von 44 $mg_{(KOH)}/g_{(Diol)}$ lässt sich ein durchschnittliches Molekulargewicht von 2550,25 g/mol errechnen, das einer durchschnittlichen Zusammensetzung von 9,9 Einheiten Diol und 8,9 Carbonat-Einheiten pro Molekül entspricht. 3920 mol Diol sind demnach mit nur 3524 mol DMC (3920 * 8,9 / 9,9) umgesetzt worden. Demzufolge sind 1361 mol (4885 - 3524) DMC azeotrop abdestilliert worden. Dieser DMC-Verlust macht demnach durchschnittlich ca. 27,8 % des eingesetzten DMCs aus. Das Destillat bestand demzufolge aus 1361 mol unumgesetztem DMC (122,5 kg) und 2*3524 mol MeOH (225,5 kg / Pro Molekül DMC werden zwei Moleküle Methanol gebildet). Dies führt zu einem DMC-Gehalt von ca. 35 Gewichtsprozent im Destillat.

Die nötigen Korrekturmengen wurden also - anders als beschrieben - bereits in der Einwaage berücksichtigt. Im Durchschnitt wurde das DMC-Methanol-Gemisch als Azeotrop abdestilliert.

Auch Anspruch 1b deutet auf die Azeotrop-Problematik hin: Ein 5-facher Überschuss an DMC, wie er in Anspruch 1b beschrieben ist, lässt sich nur durch die Notwendigkeit von Korrekturmengen erklären: Denn schon ab einem 2-fachen Überschuss wird nämlich nur der 2:1 Ester, wie er in Formel **V** dargestellt ist, gebildet, wobei R1 als Symbol für $-(CH_2)_4-$ steht.

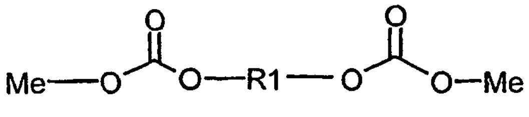

(V)

Bei einem Verhältnis von 1:1 wird sogar der Gelpunkt erreicht, in dem eine vollständige Polymerisation resultiert, wenn die DMC-Menge durch azeotrope Destillation nicht vermindert würde.

Es muss also davon ausgegangen werden, dass in der DE-A 198 29 593 azeotrope DMC-Methanol-Gemische abdestilliert werden und die abdestillierte DMC-Menge bereits in der Einwaage berücksichtigt wurde.

**Vergleichsbeispiel 1 Einstufiges Zufahren von DMC**

In der DE-A 198 29 593 wird die Umsetzung von DMC mit einem Diol in einem einstufigen Verfahren mit Reaktionsdauern von 4 Stunden bei 140 bis 200°C und einer Katalysator-Konzentration von 0,15 % bzw. 0,12 % Ti $(O\text{-}nBu)_4$ durchgeführt (Beispiel 1 und 2). Dies entspricht Konzentrationen von 211 bzw. 170 ppm Ti. Bei diesen hohen Katalysator-Konzentrationen muss der Kontakt nach Abschluss der Reaktion durch Zugabe von Phosphorsäure neutralisiert werden.

Zum Vergleich mit der DE-A 198 29 593 wurde die einstufige Verfahrensvariante untersucht, in der die gesamte benötigte Carbonat-Menge als DMC in einer Stufe zugefahren wird. Dabei wird während der gesamten Versuchslaufzeit ein DMC-Methanol-Gemisch abdestilliert. Es wurde jeweils nur über eine kurze Vigreux-Kolonne destilliert, um Kolonnen-Effekte auszuschließen (Änderung der Zusammensetzung durch Rektifikation). Am Ende einer großen Füllkörperkolonne wird nämlich jeweils die azeotrope Zusammensetzung erreicht (ca. 30 % bei Normaldruck).

In der in **Beispiel 1** beschrieben Apparatur wurden 1890,84 g Hexandiol-1,6 (16 mol) und 0,18 g Ti-isopropylat (0,01 % $Ti(O\text{-}iPr)_4$ bzw. 17 ppm Ti bezogen auf die Diol-Komponente) eingewogen, unter Stickstoff aufgeschmolzen, homogenisiert und auf 160°C erhitzt. Für die Umsetzung wurden 1261,12 g DMC (14 mol) innerhalb von 24 Stunden bei gleichbleibender Pumpleistung zudosiert. Über die kurze Kolonne wurde ein DMC-Methanol-Gemisch abdestilliert (872,4 g), das einen DMC-Gehalt von 38,1 % aufwies. Über die gesamte Laufzeit schwankte die Zusammensetzung nur leicht, die DMC-Gehalte der Destillate lagen immer zwischen 37,3 und 40,4 %. Es wurden also insgesamt 332,4 g DMC azeotrop abdestilliert, die in einem Nachfahrschritt mit derselben Pumpenleistung innerhalb von 6,3 Stunden zugefahren wurden. Dabei wurde erneut ein DMC-Methanol-Gemisch mit 41,2 % DMC abdestilliert.

Der Versuch wurde mit der halbierten Pumpleistung wiederholt: Die Reaktionsdauer - das erste Zufahren der kompletten DMC-Menge ohne Korrektur-Mengen im Nachfahrschritt - betrug jetzt 51 Stunden. Dabei wurde ein DMC-Gehalt von 29,8 % im Destillat erreicht. Eine weitere Verdopplung der Reaktionsdauer auf 108 Stunden führte zu einem DMC-Gehalt von 22,3 % im Destillat (Siehe Tabelle 3). Bei einer Reaktionsdauer von 9 Stunden wurde ein DMC-Gehalt von ca. 96 % im Destillat erhalten.

Weitere analoge Versuche wurden mit einer 15-fachen Katalysator-Konzentration - wie sie in der DE-A 198 29 593 Verwendung fand - durchgeführt. Die Ergebnisse sind ebenfalls in Tabelle 3 aufgeführt.

Tabelle 3:

| DMC-Gehalte im Destillat in Abhängigkeit der Reaktionszeit und der Katalysatormenge | | | |
|---|---|---|---|
| | **Katalysator-Konzentration** | | |
| Reaktionszeit (1. Stufe ohne Nachfahrschritt) | 0,01 % $Ti(O\text{-}iPr)_4$ (17 ppm Ti) | 0,15 % $Ti(O\text{-}iPr)_4$ (250 ppm Ti) | 0,15 % $Ti(O\text{-}nBu)_4$ (DE-A 198 29 593) |
| | | | |
| 4 h | | ca. 25,5 % | ca. 35 % |
| 9 h | ca. 96 % | | |
| 24 h | ca. 38,1 % | ∅ ca. 10,4 % *) | |
| 51 h | ca. 29,8 % | | |
| 108 h | ca. 22,3 % | | |

*) Ansteigender DMC-Gehalt von 5,7 % am Anfang bis 18,3 % am Ende des Versuchs

Der Versuch mit 9 Stunden Reaktionszeit (Katalysator-Konzentration 0,01 % $Ti(OiPr)_4$ bzw. 17 ppm Ti) zeigt, dass unter diesen Bedingungen die Umesterung der geschwindigkeitsbestimmende Schritt ist: DMC wird so schnell zugefahren, dass es ohne Reaktion direkt wieder abdestilliert wird (ca. 96 %). Die Geschwindigkeit der Destillation ist deutlich größer.

Mit zunehmender Reaktionszeit bzw. langsamerem Zudosieren des DMCs wird die Destillation langsamer, die Umesterung selbst wird konkurrenzfähig. Das DMC wird durch Reaktion (Umesterung) abgereichert, die DMC-Anteile im Destillat sinken bis auf z.B. ca. 22,3 % bei 108 Stunden Reaktionszeit.

Der Versuch mit 9 Stunden Reaktionszeit zeigt auch die Wirkung einer großen Kolonne: Ohne große Füllkörperkolonne werden die DMC-Konzentrationen erhalten, wie sie sich am Kopf des Reaktors einstellen. Wie die Beispiele

2 und 3 zeigen, reichert sich das DMC in einer Füllkörperkolonne weiter ab, am Kopf der Kolonne wird auch bei kurzen Reaktionszeiten dann das Azeotrop erhalten, DMC wird in der Kolonne abgetrennt und in den Reaktor zurückgeführt.

Durch Erhöhung der Katalysator-Konzentration um den Faktor 15 (0,15 % $Ti(O\text{-}iPr)_4$ bzw. 250 ppm Ti) wird die Umesterung stark beschleunigt, während die Geschwindigkeit der Destillation konstant bleibt. Bei gleichbleibenden Reaktionszeiten führt dies zu einer bevorzugten Abreaktion des DMCs, so dass die DMC-Gehalte im Destillat deutlich sinken (z.B. von 38 % auf durchschnittliche 10,4 % bei einer Reaktionszeit von 24 Stunden, siehe Tabelle 3). Ein Absenken der Reaktionszeit führt durch Beschleunigung der Destillation dann wieder zu einem höheren DMC-Gehalt im Destillat (ca. 25,5 % bei 4 Stunden Reaktionszeit und 0,15 % Katalysator) bzw. führt eine Erhöhung der Reaktionszeit zu einem höherem DMC-Umsatz und damit geringeren DMC-Gehalten im Destillat.

Der Versuch mit einer Reaktionsdauer von 24 Stunden und einer Katalysator-Konzentration von 0,15 % $Ti(O\text{-}iPr)_4$ (250 ppm Ti) zeigt, dass der DMC-Gehalt des Destillates mit zunehmender Reaktionszeit ansteigt. Tabelle 4 gibt diesen Anstieg der DMC-Konzentration des Destillats wieder. Die Destillatmengen, die pro Zeiteinheit anfielen, waren konstant. Der durchschnittliche DMC-Gehalt aller Destillate betrug 10,4 %.

Tabelle 4:

| DMC-Gehalt im Destillat in Abhängigkeit der Zeit bei einer Reaktionsdauer von 24 Stunden und einer Katalysator-Konzentration von 0,15 % $Ti(O\text{-}iPr)_4$ | | | |
|---|---|---|---|
| Zeit [h] | DMC-Gehalt im Destillat [%] | Zeit [h] | DMC-Gehalt im Destillat [%] |
| 3:12 | 5,72 | 14:28 | 9,43 |
| 5:00 | 5,70 | 16:15 | 10,90 |
| 7:57 | 6,41 | 17:49 | 12,30 |
| 9:34 | 7,16 | 20:19 | 14,25 |
| 11:31 | 8,06 | 24:00 | 18,31 |

Die Geschwindigkeit der Destillation bleibt während dieses Versuches konstant (gleiche Destillatmengen pro Zeiteinheit). Ein zunehmender DMC-Gehalt kann durch die Abnahme der Reaktionsgeschwindigkeit des DMCs erklärt werden: Zu Beginn des Versuchs liegen reines Diol und DMC vor, das Gleichgewicht der Umesterung ist maximal ausgelenkt. Die Triebkraft, durch eine chemische Reaktion das Gleichgewicht zu erreichen, ist hoch, die Umesterung schnell. Mit fortschreitender Reaktionsdauer nähert sich das System dem Gleichgewicht, die Triebkraft zur weiteren Umesterung nimmt ab. Dadurch wird die Reaktionsgeschwindigkeit der Umesterung geringer im Gegensatz zur gleichbleibenden Destillation, und der DMC-Gehalt des Destillates steigt sukzessive an. Wenn dieses Verhalten bei den anderen Versuchen nicht oder nur untergeordnet beobachtet wurde (Steigerung des DMC-Gehaltes um ca. 1 Prozentpunkt), so ist dies Ausdruck des bereits von Beginn an vorhanden höheren Niveaus des DMC-Gehaltes (23-30 %).

Dieses deutliche Ansteigen des DMC-Gehaltes wird beim mehrstufigen, erfindungsgemäßen Verfahren nicht beobachtet, da in der ersten Stufe nur ca. 1/3 der gesamten DMC-Menge in Form des DMC-Methanol-Gemisches aus einem vorherigen Ansatz zur Verfügung steht. So wird in diesem Versuch (siehe Tabelle 4) auch in den ersten 8 Stunden nur ein DMC-Gehalt von 5 bis 6 % im Destillat erreicht.

In der DE-A 198 29 593 wird im Anspruch 1c ein DMC-Gehalt des Destillates von 85 bis 2,8 Gewichtsprozent beschrieben. Wie die Vergleichsversuche zeigen, ist ein DMC-Gehalt von ca. 3 % sehr wohl zu realisieren: Bei hohen Katalysator-Konzentrationen und langen Reaktionszeiten ist zu Beginn eines Ansatzes ohne weiteres ein DMC-Gehalt von ca. 5 % im Destillat erreichbar - und bei längeren Reaktionszeiten oder höheren Katalysator-Konzentrationen auch darunter.

Diese geringen DMC-Verluste werden allerdings durch eine so hohe Katalysator-Konzentration erkauft, dass dieser nach Abschluss der Reaktion umständlich neutralisiert bzw. abgetrennt werden muss. Zusätzlich steigt mit zunehmender Reaktionszeit der DMC-Verlust durch Erreichen des Gleichgewichts der Umesterung an. Dauerhaft niedrige DMC-Gehalte im Destillat können demnach zum Ende der Reaktion hin nur bei extremen Reaktionszeiten erreicht werden.

Verringert man die Katalysatormenge so weit, dass dieser im Produkt belassen werden kann (kleiner 0,01 % $Ti(O\text{-}iPr)_4$ bzw. 17 ppm Ti), sind geringe DMC-Gehalte im Destillat nicht vernünftigerweise erreichbar. So kann selbst bei einer Reaktionszeit von über 100 Stunden der DMC-Gehalt nur auf ca. 22 % gesenkt werden. Für eine weitere Absenkung des DMC-Gehaltes im Destillat bei Katalysator-Konzentrationen, die später im Produkt belassen werden können, ist eine weitere, nicht mehr praktikable Steigerung der Reaktionsdauer nötig.

## Patentansprüche

1. Verfahren zur Herstellung aliphatischer Oligocarbonatdiole, bei dem

   A) aliphatische Diole mit
   B) Dimethylcarbonat
   C) gegebenenfalls in Anwesenheit von Katalysatoren

   bis zu einem Gesamtumsatz des eingesetzten Dimethylcarbonats von > 80 % umgesetzt werden, **dadurch gekennzeichnet, dass**

   a) das Dimethylcarbonat in mindestens zwei nacheinanderfolgenden Stufen zugegeben wird und
   b) mindestens in der ersten Stufe Methanol/Dimethylcarbonat-Mischungen als DMC-Quelle eingesetzt werden.

2. Verfahren zur Herstellung aliphatischer Oligocarbonatdiole nach Anspruch 1, **dadurch gekennzeichnet, dass** während der Umesterung Methanol in Mischungen mit nicht umgesetztem Dimethylcarbonat abdestilliert wird.

3. Verfahren zur Herstellung aliphatischer Oligocarbonatdiole nach Anspruch 1 oder 2, **dadurch gekennzeichnet, dass** als Methanol/Dimethylcarbonat-Mischung ein Destillat erhältlich aus einem Verfahren gemäß Anspruch 2 verwendet wird.

4. Verfahren nach Anspruch 3 **dadurch gekennzeichnet, dass** die Umsetzung von DMC und aliphatischen Diolen zweistufig durchgeführt wird, indem in einer ersten Stufe abdestillierte DMC-Methanol-Gemisclie aus einem vorherigen Ansatz eingesetzt werden unter weiterer Nutzung des enthaltenen DMCs und in einer zweiten Stufe reines DMC eingesetzt wird, wobei ein DMC-Methanol-Gemisch abdestilliert wird, das aufgefangen und wiederum in einem folgenden Ansatz in der ersten Stufe eingesetzt wird.

5. Verfahren nach Anspruch 3 **dadurch gekennzeichnet, dass** die Umsetzung von DMC und aliphatischen Diolen dreistufig durchgeführt wird, indem in einer ersten Stufe das abdestillierte DMC-Methanol-Gemisch mit einem geringen Anteil DMC aus der zweiten Stufe eines vorherigen Ansatzes eingesetzt wird unter fast vollständiger Nutzung des enthaltenen DMCs und in einer zweiten Stufe das DMC-Methanol-Gemisch, das in der dritten Stufe eines vorherigen Ansatzes abdestilliert wurde, eingesetzt wird unter Nutzung des enthaltenen DMCs und Abdestillation eines DMC-Methanol-Gemisches mit einem geringen Anteil an DMC, das aufgefangen und in einem folgenden Ansatz in der ersten Stufe eingesetzt wird, und in einer dritten Stufe reines DMC eingesetzt wird, wobei ein DMC-Methanol-Gemisch erhalten wird, das aufgefangen und wiederum in einem folgenden Ansatz in der zweiten Stufe eingesetzt wird.

6. Verfahren nach einem der Ansprüche 1-5, **dadurch gekennzeichnet, dass** die Gesamtmenge an DMC, die sich aus der Summe der jeweils eingesetzten DMC-Teilmengen in allen Stufen ergibt, vermindert um die Mengen an DMC, die während der gesamten Reaktion abdestilliert werden, der Gesamtmenge an DMC, die durch die Stöchiometrie des gewünschten Produktes vorgegeben ist, entspricht, wobei nach der jeweils letzten Stufe des Verfahrens die zuvor abdestillierten, fehlenden DMC-Mengen zusätzlich nachgefahren oder in der jeweils letzten Stufe, in der reines DMC zugefahren wird, zusätzlich eingesetzt werden.

7. Verfahren nach einem der Ansprüche 1-6, **dadurch gekennzeichnet, dass** ein Überschuss an DMC eingesetzt wird, das entstehende Oligocarbonatdiol entkappt wird, und anschließend durch Korrektur durch Zugabe der entsprechenden Mengen der Diol-Komponenten und erneuter Umesterung die gewünschte Stöchiometrie des Oligocarbonatdiols eingestellt wird.

8. Verfahren nach einem der Ansprüche 1-7, **dadurch gekennzeichnet, dass** das durch die Stöchiometrie des gewünschten Endproduktes vorgegebene molare Verhältnis von Diol zu DMC im Produkt zwischen 1,01 und 2,0 liegt.

9. Verfahren nach einem der Ansprüche 1-8, **dadurch gekennzeichnet, dass** die Umsetzung von DMC mit aliphatischen Diolen bei Drücken zwischen 0,4 bis 100 bar und bei Temperaturen von 100 bis 300° durchgeführt wird.

10. Verfahren nach einem der Ansprüche 1-9, **dadurch gekennzeichnet, dass** es diskontinuierlich oder kontinuierlich durchgeführt wird.

**11.** Verfahren nach einem der Ansprüche 1-10, **dadurch gekennzeichnet, dass** aliphatische Diole mit 3 bis 20 C-Atomen in der Kette, sowie Mischungen verschiedener Diole eingesetzt werden.

**12.** Verfahren nach einem der Ansprüche 1-11, **dadurch gekennzeichnet, dass** Additionsprodukte der Diole mit Lactonen (Esterdiole) wie z.B. Caprolacton, Valerolacton etc., sowie Mischungen der Diole mit Lactonen eingesetzt werden.

**13.** Verfahren nach einem der Ansprüch 1-12, **dadurch gekennzeichnet, dass** Additionsprodukte der Diole mit Dicarbonsäuren wie z.B.: Adipinsäure, Glutarsäure, Bernsteinsäure, Malonsäure etc. oder Ester der Dicarbonsäuren sowie Mischungen der Diole mit Dicarbonsäuren bzw. Ester der Dicarbonsäuren eingesetzt werden.

**14.** Verfahren nach einem der Ansprüche 1-13, **dadurch gekennzeichnet, dass** Polyetherpolyole wie z.B. Polyethylenglycol, Polypropylenglycol, Polybutylenglycol eingesetzt werden.

**15.** Verfahren nach einem der Ansprüche 1-14, **dadurch gekennzeichnet, dass** Hexandiol-1,6 oder Mischungen von Hexandiol-1,6 und Caprolacton eingesetzt werden.

**16.** Verfahren nach einem der Ansprüche 12, 13 und 15, **dadurch gekennzeichnet, dass** die Ester in situ ohne einleitende Umesterung aus den Rohstoffen während der Oligocarbonat-Diol-Herstellung gebildet werden.

**17.** Verfahren nach einem der Ansprüche 1-16, **dadurch gekennzeichnet, dass** alle für Umesterungsreaktionen bekannten löslichen Katalysatoren (homogene Katalyse) eingesetzt werden.

**18.** Verfahren nach einem der Ansprüche 1-17, **dadurch gekennzeichnet, dass** lösliche Katalysatoren in Konzentrationen bis zu 1000 ppm (0,1 %) eingesetzt werden.

**19.** Verfahren nach einem der Ansprüche 1-18, **dadurch gekennzeichnet, dass** der Katalysator nach Abschluss der Reaktion im Produkt belassen, abgetrennt, neutralisiert oder maskiert wird.

**20.** Verfahren nach einem der Ansprüche 1-19, **dadurch gekennzeichnet, dass** heterogene Umesterungskatalysatoren eingesetzt werden (heterogene Katalyse).

**21.** Verfahren nach einem der Ansprüche 1-20, **dadurch gekennzeichnet, dass** die endständigen OH-Gruppen nach Abschluss der Reaktion durch Entfernen der letzten Reste von Methanol durch Anlegen eines Vakuums entkappt werden.

**22.** Verfahren nach einem der Ansprüche 1-21, **dadurch gekennzeichnet, dass** die Entkappung der OH-Endgruppen nach Abschluss der Reaktion (Destillation) durch Austragung der letzten Reste von Methanol und Vervollständigung der Umesterung durch Einleiten von inerten Gasblasen in das Reaktionsgemisch gegebenenfalls unter Anlegen von Vakuum geschieht.

**23.** Verfahren nach Anspruch 22, **dadurch gekennzeichnet, dass** der das Oligocarbonat verlassende, Methanol- und Dimethylcarbonat-haltige Gasstrom teilweise zur Sättigung erneut dem Oligocarbonat zugeführt wird.

**24.** Verfahren nach einem der Ansprüche 1-23, **dadurch gekennzeichnet, dass** die Entkappung der endständigen OH-Gruppen nach Abschluss der Reaktion (Destillation) durch Einleiten von inerten Gasen wie Stickstoff, Argon, Methan, Ethan, Propan, Butan, Dimethylether, trockenem Erdgas oder trockenem Wasserstoff, etc. in den Reaktor und Erzeugung von Gasblasen im Reaktor gegebenenfalls unter Anlegen eines Vakuums durchgeführt wird.

**25.** Verfahren nach einem der Ansprüche 1-23, **dadurch gekennzeichnet, dass** die Entkappung der endständigen OH-Gruppen nach Abschluss der Reaktion (Destillation) durch Einleiten von leichtsiedenden, inerten Flüssigkeiten wie Pentan, Cyclopentan, Hexan, Cyclohexan, Petrolether, Diethylether oder Methyl-tert-Butylether, etc. in den Reaktor und Erzeugung von Gasblasen im Reaktor gegebenenfalls unter Anlegen eines Vakuums geschieht, wobei die Stoffe flüssig oder gasförmig eingeleitet werden können.

**26.** Verfahren nach einem der Ansprüche 21-25, **dadurch gekennzeichnet, dass** die Entkappung bei Temperaturen von 130°C bis 300°C und bei Drücken von 0,01 mbar bis 10 bar durchgeführt wird.

## Claims

1. Process for the production of aliphatic oligocarbonate diols, in which

   A) aliphatic diols are reacted with
   B) dimethyl carbonate
   C) optionally in the presence catalysts

   up to an overall conversion of the dimethyl carbonate used of > 80%, **characterised in that**

   a) the dimethyl carbonate is added in at least two successive stages, and
   b) at least in the first stage methanol/dimethyl carbonate mixtures are used as DMC source.

2. Process for the production of aliphatic oligocarbonate diols according to claim 1, **characterised in that** during the transesterification methanol is distilled off in mixtures with unreacted dimethyl carbonate.

3. Process for the production of aliphatic oligocarbonate diols according to claim 1 or 2, **characterised in that** as methanol/dimethyl carbonate mixture a distillate is used that can be obtained from a process according to claim 2.

4. Process according to claim 3, **characterised in that** the reaction of DMC and aliphatic diols is carried out in two stages, wherein DMC-methanol mixtures that have been distilled off from a previous batch are used in a first stage with further utilisation of the contained DMC, and pure DMC is used in a second stage, a DMC-methanol mixture being distilled off that is collected and re-used in the first stage in a following batch.

5. Process according to claim 3, **characterised in that** the reaction of DMC and aliphatic diols is carried out in three stages, wherein the DMC-methanol mixture that has been distilled off is used together with a small proportion of DMC from the second stage of a previous batch in a first stage, with almost complete utilisation of the contained DMC, and the DMC-methanol mixture that has been distilled off in the third stage of a previous batch is used in a second stage, with utilisation of the contained DMC and distilling-off of a DMC-methanol mixture with a small proportion of DMC, which is collected and used in the first stage in a following batch, and pure DMC is used in a third stage, a DMC-methanol mixture being obtained that is collected and re-used in the second stage in a following batch.

6. Process according to one of claims 1 to 5, **characterised in that** the total amount of DMC represented by the sum of the partial amounts of DMC used in each case in all stages, less the amounts of DMC that are distilled off during the overall reaction, corresponds to the total amount of DMC that is predetermined by the stoichiometry of the desired product, wherein after the in each case last stage of the process the missing amounts of DMC that have previously been distilled off are additionally added or are additionally used in the in each case last stage in which pure DMC is added.

7. Process according to one of claims 1 to 6, **characterised in that** an excess of DMC is used, the oligocarbonate diol that is formed is de-capped, and the desired stoichiometry of the oligocarbonate diol is then correctly adjusted by adding the corresponding amounts of the diol components and renewed esterification.

8. Process according to one of claims 1 to 7, **characterised in that** the molar ratio of diol to DMC in the product predetermined by the stoichiometry of the desired end product is between 1.01 and 2.0.

9. Process according to one of claims 1 to 8, **characterised in that** the reaction of DMC with aliphatic diols is carried out at pressures between 0.4 and 100 bar, and at temperatures from 100°C to 300°C.

10. Process according to one of claims 1 to 9, **characterised in that** it is carried out batchwise or continuously.

11. Process according to one of claims 1 to 10, **characterised in that** aliphatic diols with 3 to 20 C atoms in the chain, as well as mixtures of various diols, are used.

12. Process according to one of claims 1 to 11, **characterised in that** addition products of the diols with lactones (ester diols) such as for example caprolactone, valerolactone etc., as well as mixtures of the diols with lactones, are used.

**13.** Process according to one of claims 1 to 12, **characterised in that** addition products of the diols with dicarboxylic acids, such as for example adipic acid, glutaric acid, succinic acid, malonic acid etc., or esters of the dicarboxylic acids as well as mixtures of the diols with dicarboxylic acids or esters of the dicarboxylic acids, are used.

**14.** Process according to one of claims 1 to 13, **characterised in that** polyether polyols such as for example polyethylene glycol, polypropylene glycol, polybutylene glycol are used.

**15.** Process according to one of claims 1 to 14, **characterised in that** hexanediol-1,6 or mixtures of hexanediol-1,6 and caprolactone are used.

**16.** Process according to one of claims 12, 13 and 15, **characterised in that** the ester is formed *in situ* without preliminary transesterification from the starting materials during the oligocarbonate-diol production.

**17.** Process according to one of claims 1 to 16, **characterised in that** all known soluble catalysts for transesterification reactions (homogeneous catalysis) are used.

**18.** Process according to one of claims 1 to 17, **characterised in that** soluble catalysts are used in concentrations up to 1000 ppm (0.1 %).

**19.** Process according to one of claims 1 to 18, **characterised in that** the catalyst is left in the product, separated, neutralised or masked after the end of the reaction.

**20.** Process according to one of claims 1 to 19, **characterised in that** heterogeneous transesterification catalysts are used (heterogeneous catalysis).

**21.** Process according to one of claims 1 to 20, **characterised in that** the terminal OH groups are de-capped after the end of the reaction by removing the last residues of methanol by applying a vacuum.

**22.** Process according to one of claims 1 to 21, **characterised in that** the de-capping of the OH terminal groups after the end of the reaction (distillation) is effected by expelling the last residues of methanol and completing the transesterification by passing inert gas bubbles into the reaction mixture, optionally under application of a vacuum.

**23.** Process according to claim 22, **characterised in that** the methanol-containing and dimethyl carbonate-containing gas stream leaving the oligocarbonate is partially re-added to the oligocarbonate for the saturation.

**24.** Process according to one of claims 1 to 23, **characterised in that** the de-capping of the terminal OH groups after the end of the reaction (distillation) is carried out by passing inert gases such as nitrogen, argon, methane, ethane, propane, butane, dimethyl ether, dry natural gas or dry hydrogen, etc. into the reactor and generating gas bubbles in the reactor, optionally under the application of a vacuum.

**25.** Process according to one of claims 1 to 23, **characterised in that** the de-capping of the terminal OH groups after the end of the reaction (distillation) is effected by passing low boiling point, inert liquids such as pentane, cyclopentane, hexane, cyclohexane, petroleum ether, diethyl ether or methyl tert.-butyl ether, etc. into the reactor and generating gas bubbles in the reactor optionally under the application of a vacuum, wherein the above substances may be introduced in liquid or gaseous form.

**26.** Process according to one of claims 21 to 25, **characterised in that** the de-capping is carried out at temperatures of 130°C to 300°C and at pressures of 0.01 mbar to 10 bar.

## Revendications

**1.** Procédé de préparation d'oligocarbonate-diols aliphatiques, dans lequel on fait réagir :

A) des diols aliphatiques, avec
B) le carbonate de diméthyle,
C) le cas échéant, en présence de catalyseurs,

jusqu'à une réaction globale du carbonate de diméthyle mis en oeuvre de > 80%, **caractérisé en ce que**

a) le carbonate de diméthyle est ajouté au cours d'au moins deux étapes successives, et
b) on met en oeuvre au moins dans la première étape, des mélanges méthanol/carbonate de diméthyle comme source de DMC.

2. Procédé de préparation d'oligocarbonate-diols aliphatiques selon la revendication 1, **caractérisé en ce que** pendant la transestérification, on distille le méthanol en mélange avec le carbonate de diméthyle n'ayant pas réagi.

3. Procédé de préparation d'oligocarbonate-diols aliphatiques selon la revendication 1 ou 2, **caractérisé en ce** l'on utilise comme mélange méthanol/carbonate de diméthyle, un distillat obtenu par un procédé selon la revendication 2.

4. Procédé selon la revendication 3, **caractérisé en ce que** la réaction du DMC et des diols aliphatiques est réalisée en deux étapes, **en ce que** dans une première étape, on met en oeuvre les mélanges DMC-méthanol distillés provenant d'une opération précédente, avec utilisation du DMC présent, et dans une deuxième étape, on met en oeuvre du DMC pur, où on distille un mélange DMC-méthanol, qui est recueilli et à nouveau mis en oeuvre dans la première étape d'une opération suivante.

5. Procédé selon la revendication 3, **caractérisé en ce que** la réaction du DMC et des diols aliphatiques est réalisée en trois étapes, **en ce que** dans une première étape, on met en oeuvre le mélange DMC-méthanol distillé avec une faible proportion de DMC provenant de la deuxième étape d'une opération précédente, avec utilisation presque complète du DMC présent et dans une deuxième étape, le mélange DMC-méthanol, qui est distillé dans la troisième étape d'une opération précédente, est mis en oeuvre avec utilisation du DMC présent et distillation d'un mélange DMC-méthanol avec une faible proportion de DMC, qui est recueilli et mis en oeuvre dans une opération suivante, dans la première étape, et dans une troisième étape, on met en oeuvre du DMC pur, où on obtient un mélange DMC-méthanol, qui est recueilli et à nouveau mis en oeuvre dans une opération suivante, dans la deuxième étape.

6. Procédé selon l'une quelconque des revendications 1-5, **caractérisé en ce que** la quantité globale de DMC, qui est obtenue par la somme de chaque quantité partielle de DMC mise en oeuvre dans toutes les étapes, diminuée de la quantité de DMC, qui est distillée au cours de toute la réaction, correspond à la quantité totale de DMC, qui est donnée par la stoechiométrie du produit souhaité, où les quantités de DMC manquantes, précédemment distillées sont en outre ramenées après chaque dernière étape du procédé, ou sont en outre mises en oeuvre dans chaque dernière étape, dans lesquelles du DMC pur est introduit.

7. Procédé selon l'une quelconque des revendications 1-6, **caractérisé en ce que** l'on met en oeuvre un excès de DMC, on débloque l'oligocarbonate-diol formé et ensuite, on ajuste la stoechiométrie souhaitée de l'oligocarbonate-diol par correction par addition des quantités correspondantes du composant diol et nouvelle transestérification.

8. Procédé selon l'une quelconque des revendications 1-7, **caractérisé en ce que** le rapport molaire donné par la stoechiométrie du produit final souhaité, du diol au DMC dans le produit, se situe dans l'intervalle allant de 1,01 à 2,0.

9. Procédé selon l'une quelconque des revendications 1-8, **caractérisé en ce que** la réaction du DMC avec des diols aliphatiques est réalisée à des pressions allant de 0,4 à 100 bar et à des températures allant de 100 à 300°.

10. Procédé selon l'une quelconque des revendications 1-9, **caractérisé en ce qu'**il est réalisé de manière discontinue ou continue.

11. Procédé selon l'une quelconque des revendications 1-10, **caractérisé en ce que** l'on met en oeuvre des diols aliphatiques ayant 3 à 20 atomes C dans la chaîne, ainsi que des mélanges de différents diols.

12. Procédé selon l'une quelconque des revendications 1-11, **caractérisé en ce que** l'on met en oeuvre les produits d'addition de diols avec des lactones (esterdiols), comme par exempe la caprolactone, la valérolactone, etc., ainsi que des mélanges des diols avec des lactones.

13. Procédé selon l'une quelconque des revendications 1-12, **caractérisé en ce que** l'on met en oeuvre les produits d'addition de diols avec des acides dicarboxyliques comme par exemple, l'acide adipique, l'acide glutarique, l'acide

succinique, l'acide malonique, etc., ou des esters des acides dicarboxyliques, ainsi que des mélanges des diols avec les acides dicarboxyliques ou les esters d'acide dicarboxylique.

**14.** Procédé selon l'une quelconque des revendications 1-13, **caractérisé en ce que** l'on met en oeuvre des polyéther-polyols, comme par exemple le polyéthylèneglycol, le polypropylèneglycol, le polybutylèneglycol.

**15.** Procédé selon l'une quelconque des revendications 1-14, **caractérisé en ce que** l'on met en oeuvre l'hexanediol-1,6 ou des mélanges d'hexanediol-1,6 et de caprolactone.

**16.** Procédé selon l'une quelconque des revendications 12, 13 et 15, **caractérisé en ce que** l'on forme l'ester in situ sans transestérification préalable sur les matières premières pendant la préparation de l'oligocarbonate-diol.

**17.** Procédé selon l'une quelconque des revendications 1-16, **caractérisé en ce que** l'on met en oeuvre tous les catalyseurs solubles connus pour les réactions de transestérification (catalyse homogène).

**18.** Procédé selon l'une quelconque des revendications 1-17, **caractérisé en ce que** l'on met en oeuvre les catalyseurs solubles en des concentrations de jusqu'à 1000 ppm (0,1%).

**19.** Procédé selon l'une quelconque des revendications 1-18, **caractérisé en ce que** le catalyseur est laissé, séparé, neutralisé ou masqué dans le produit, après la fin de la réaction.

**20.** Procédé selon l'une quelconque des revendications 1-19, **caractérisé en ce que** l'on met en oeuvre des catalyseurs hétérogènes de transestérification (catalyse hétérogène).

**21.** Procédé selon l'une quelconque des revendications 1-20, **caractérisé en ce que** les radicaux OH terminaux sont débloqués après la fin de la réaction, par élimination des derniers restes de méthanol, par mise sous vide.

**22.** Procédé selon l'une quelconque des revendications 1-21, **caractérisé en ce que** le processus de coiffage des radicaux OH terminaux se produit après la fin de la réaction (distillation) par élimination des derniers restes de méthanol et complétion de la transestérification par introduction de bulles de gaz inerte dans le mélange de réaction, le cas échéant avec mise sous vide.

**23.** Procédé selon la revendication 22, **caractérisé en ce que** le courant gazeux, contenant le méthanol et le carbonate de diméthyle, laissant l'oligocarbonate est amené partiellement pour saturer à nouveau l'oligocarbonate.

**24.** Procédé selon l'une quelconque des revendications 1-23, **caractérisé en ce que** le processus de déblocage des radicaux OH terminaux est réalisé après la fin de la réaction (distillation) par introduction de gaz inerte, comme de l'azote, de l'argon, du méthane, de l'éthane, du propane, du butane, le diméthyléther, du gaz naturel sec ou de l'hydrogène sec, etc., dans le réacteur pour produire des bulles de gaz dans le réacteur, le cas échéant, avec mise sous vide.

**25.** Procédé selon l'une quelconque des revendications 1-23, **caractérisé en ce que** le processus de déblocage des radicaux OH terminaux se produit après la fin de la réaction (distillation) par introduction de liquide inerte, de faible point d'ébullition, comme le pentane, le cyclopentane, l'hexane, le cyclohexane, l'éther de pétrole, le diéthyléther ou le méthyl-t-butyléther, etc., dans le réacteur et production de bulles de gaz dans le réacteur, le cas échéant, avec mise sous vide, où les substances peuvent être introduites à l'état liquide ou gazeux.

**26.** Procédé selon l'une quelconque des revendications 21-25, **caractérisé en ce que** le processus de coiffage est réalisé à des températures allant de 130°C à 300°C et sous des pressions allant de 0,01 mbar à 10 bar.